(19) Europäisches Patentamt / European Patent Office / Office européen des brevets

(11) **EP 4 108 503 B1**

(12) **EUROPEAN PATENT SPECIFICATION**

(45) Date of publication and mention
of the grant of the patent:
**31.01.2024 Bulletin 2024/05**

(21) Application number: **21925094.1**

(22) Date of filing: **30.03.2021**

(51) International Patent Classification (IPC):
**B60L 15/20** (2006.01)   **B60K 6/387** (2007.10)
**B60K 6/442** (2007.10)   **B60W 10/06** (2006.01)
**B60W 10/08** (2006.01)   **B60W 10/26** (2006.01)
**B60W 20/11** (2016.01)   **B60W 20/14** (2016.01)
**B60W 30/188** (2012.01)   **B60L 50/61** (2019.01)
**B60W 50/00** (2006.01)   **B60W 30/18** (2012.01)

(52) Cooperative Patent Classification (CPC):
**B60L 50/61; B60K 6/387; B60K 6/442;**
**B60L 15/2054; B60W 10/06; B60W 10/08;**
**B60W 10/26; B60W 20/11; B60W 20/14;**
**B60W 30/18127; B60W 30/188;** B60L 2240/12;
B60L 2240/14; B60L 2240/423; B60L 2240/443;

(Cont.)

(86) International application number:
**PCT/CN2021/084119**

(87) International publication number:
**WO 2022/204993 (06.10.2022 Gazette 2022/40)**

(54) **MOTOR TORQUE FILTERING CONTROL METHOD AND SYSTEM, AND HYBRID VEHICLE**

VERFAHREN UND SYSTEM ZUR STEUERUNG DER MOTORDREHMOMENTFILTERUNG UND HYBRIDES ELEKTROFAHRZEUG

PROCÉDÉ ET SYSTÈME DE COMMANDE DE FILTRAGE DE COUPLE DE MOTEUR ET VÉHICULE HYBRIDE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**28.12.2022 Bulletin 2022/52**

(73) Proprietors:
• **Zhejiang Geely Holding Group Co., Ltd.**
**Hangzhou, Zhejiang 310051 (CN)**
• **Ningbo Geely Royal Engine Components Co., Ltd.**
**Ningbo City, Zhejiang 315336 (CN)**
• **Aurobay Technology Co., Ltd.**
**Ningbo, Zhejiang 315899 (CN)**

(72) Inventors:
• **JING, Junchao**
**Zhejiang 310051 (CN)**
• **LIU, Yiqiang**
**Zhejiang 310051 (CN)**
• **HUANG, Weishan**
**Zhejiang 310051 (CN)**
• **YANG, Jun**
**Zhejiang 310051 (CN)**
• **WANG, Ruiping**
**Zhejiang 310051 (CN)**
• **SCHOLTEN, Ingo**
**Zhejiang 310051 (CN)**

(74) Representative: **Ziebig Hengelhaupt Intellectual**
**Property Attorneys**
**Patentanwaltskanzlei PartGmbB**
**Leipziger Straße 49**
**10117 Berlin (DE)**

(56) References cited:
**CN-A- 108 528 272**     **CN-A- 111 605 553**
**CN-A- 112 440 971**     **US-A1- 2009 118 945**

EP 4 108 503 B1

**(Cont. next page)**

US-A1- 2017 355 360    US-B1- 6 335 604
US-B1- 9 340 199    US-B2- 7 315 774
US-B2- 9 637 108

• KOCH ANDREAS ET AL: "Drivability Optimization by Reducing Oscillation of Electric Vehicle Drivetrains", WORLD ELECTRIC VEHICLE JOURNAL, vol. 11, no. 4, 5 December 2020 (2020-12-05), page 68, XP093078210, ISSN: 2032-6653, DOI: 10.3390/wevj11040068

(52) Cooperative Patent Classification (CPC): (Cont.)
B60L 2240/486; B60L 2250/28; B60L 2270/145;
B60W 2050/0026; B60W 2510/083;
B60W 2510/244; B60W 2520/10; B60W 2540/10;
B60W 2540/103; B60W 2710/085; Y02T 10/62;
Y02T 10/72

**Description**

**FIELD OF THE INVENTION**

The present invention relates to the technical field of torque filtering of a hybrid electric vehicle, and particularly to a motor torque filtering control method and system and a hybrid electric vehicle.

**BACKGROUND OF THE INVENTION**

As a battery of a pure electric vehicle technology system is complex in technology and high in cost, and with the development of electrification systems and increasingly stringent requirements of national regulations on fuel consumption and emissions, hybrid electric vehicles are greatly popularized.

Accordingly, US 2017/355360 A1 discloses a system and method for controlling backlash in a vehicle powertrain including the step of controlling a torque request of the powertrain with a first control strategy after an occurrence of a backlash predictor and before an occurrence of a backlash. Another step may be employed whereby the torque request is controlled with a second control strategy after the first control strategy and before the occurrence of the backlash such that a torque request level is below a highest torque request level obtained during the first control-strategy.

However, US 9 340 199 B1 teaches a method of operating a hybrid electric vehicle that coordinates operation of an internal combustion engine, a motor, and friction brakes to mitigate a driveline lash crossing without delaying generation of negative torque. In response to a request to transition from positive torque to negative torque, the engine and motor are controlled to rapidly reduce powertrain torque to a small positive value, slowly reduce powertrain torque through the driveline lash zone, and then rapidly reduce powertrain torque to the target. To avoid delay, the friction brakes are applied in a coordinated manner to supply the negative torque during the transition.

Finally, US 2009/118945 A1 relates to a hybrid powertrain system that includes a transmission device operative to transfer power between an input member, a torque machine and an output member, the output member coupled to a driveline coupled to a wheel to transfer tractive torque therebetween. A method for controlling the hybrid powertrain system includes monitoring an operator torque request, determining an operating range state of the transmission device, determining a net output torque to the output member based upon the operator torque request, determining a lash state of the driveline, and determining a command for transferring output torque to the output member based upon the operating range state of the transmission device, the net output torque, and the lash state of the driveline.

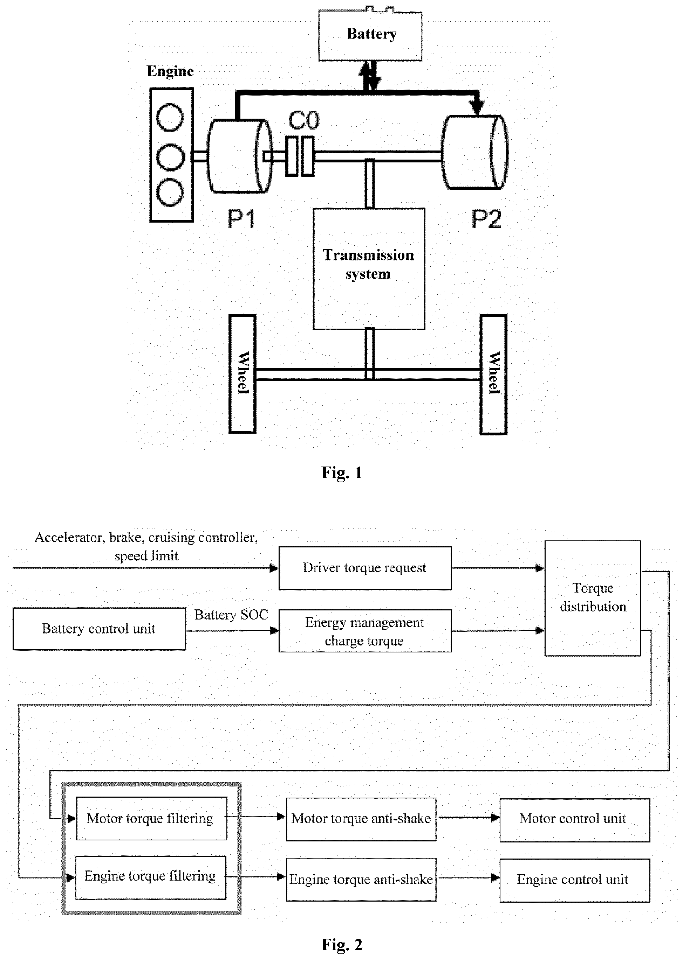

A hybrid power system includes a single-motor hybrid power system and a dual-motor hybrid power system, and the dual-motor hybrid power system has a pure electric driving mode, a serial driving mode and a parallel driving mode. FIG. 1 shows a schematic structural diagram of a conventional dual-motor hybrid power system. As shown in FIG. 1, the power system includes an engine, a motor P1, a motor P2, a clutch, a transmission system, etc. In the serial driving mode, the clutch C0 is not engaged, the engine charges a battery through the motor P1, and the motor P2 drives wheels. In the parallel driving mode, the clutch C0 is engaged, and the engine directly drives the wheels.

FIG. 2 shows a schematic block diagram of a torque path of a conventional dual-motor hybrid power system. As shown in FIG. 2, a driver request torque is calculated through signals of such as an accelerator pedal, a brake pedal, etc., an energy management module calculates a charge request according to battery SOC, etc., an engine request torque and a motor request torque are calculated through a torque distribution module according to a vehicle driving mode (pure electric, serial and parallel), and the engine request torque and the motor request torque are filtered. The main purpose of motor filtering control is to avoid shock or dragging sensation caused by sudden increase, decrease or reversal of a motor torque to the transmission system, and at the same time, in the premise of no shock, the motor torque responds to a regen (recovery) request as fast as possible during kinetic energy recovery, thereby reducing fuel consumption. If a distributed motor torque is not filtered or the filtering effect is poor, a high risk of drastic torque change may be caused, thus causing vehicle jerk.

For motor torque filtering, objects of filtering may be slightly different for different vehicle working conditions. For example, when the motor torque drives wheels, especially in a working condition that the motor torque is over zero, no filtering or a poor filtering effect brings shock and poor driving experience. For another example, in a brake energy recovery working condition, a property of smoothness without shock and a property of ensuring regen request following performance shall be balanced.

**BRIEF DESCRIPTION OF THE INVENTION**

In view of the problem, the present invention provides a motor torque filtering control method and system and a hybrid electric vehicle for overcoming the problems or at least partially solving the problems.

One object of the present invention is to provide a novel filtering method, to ensure a vehicle to run smoothly without impact.

Another object of the present invention is to ensure the regen request following performance in a brake energy recovery working condition on the premise that the vehicle runs smoothly without impact.

Yet another further object of the present invention is to avoid the impact sensation caused in an over-zero working condition.

Specifically, the present invention provides a motor torque filtering control method, for filtering a motor request torque of a hybrid electric vehicle, and the motor torque filtering control method including the following steps:

determining a current working condition of a vehicle, the current working condition including a brake energy recovery working condition;

selecting a filtering strategy corresponding to the current working condition from multiple preset filtering strategies according to the current working condition of the vehicle, to filter the motor request torque of the motor; wherein when the current working condition of the vehicle is not the brake energy recovery working condition, the selected filtering strategy is a first filtering strategy, and the first filtering strategy includes the following steps:

acquiring a driving mode and a vehicle speed of the vehicle in a current filtering cycle and a motor request torque distributed before filtering, and acquiring a motor output torque after filtering in a previous filtering cycle;

determining a target maximum filtering velocity $V_{max}$ and a target minimum filtering velocity $V_{min}$ according to the driving mode, the motor output torque and the vehicle speed;

determining an interpolation coefficient R, $0 \leq R \leq 1$;

calculating a first filtering gradient $M_1$ by a formula $M_1 = R*V_{max} + (1-R)*V_{min}$; and

filtering the motor request torque of the motor in accordance with the first filtering gradient $M_1$.

Further, determining the target maximum filtering velocity $V_{max}$ and the target minimum filtering velocity $V_{min}$ according to the driving mode, the motor output torque and the vehicle speed, includes the following steps:

looking up a corresponding preset first mapping relationship table and a second preset mapping relationship table in the current working condition and the driving mode; the first mapping relationship table stores a mapping relationship of the motor output torque, the vehicle speed and the maximum filtering velocity, and the second mapping relationship table stores a mapping relationship of the motor output torque, the vehicle speed and the minimum filtering velocity; and

determining the corresponding target maximum filtering velocity $V_{max}$ and the target minimum filtering velocity $V_{min}$ from the first mapping relationship table and the second mapping relationship table respectively according to the motor output torque and the vehicle speed of the vehicle.

Further, each of the first mapping relationship table and the second mapping relationship table in each working condition may be calibrated in the following modes:

generating a first initial mapping relationship table of the motor output torque, the vehicle speed and a preset filtering velocity V' in the working condition, the preset filtering velocity V' being a preset maximum filtering velocity or minimum filtering velocity to be modified;

controlling the vehicle to operate in the working condition and different motor output torques and vehicle speeds according to the first initial mapping relationship table, and when the vehicle operates, filtering the motor request torque of the motor by taking the preset filtering velocity V' in the first initial mapping relationship table corresponding to the motor output torque and the vehicle speed of the operating vehicle as a filtering gradient, to obtain a first filtering result; and

judging whether the preset filtering velocity V' in the first initial mapping relationship table needs to be modified according to the first filtering result; if so, modifying the preset filtering velocity V', and if not, maintaining the preset filtering velocity V', thereby calibrating the first initial mapping relationship table as the first mapping relationship table or the second mapping relationship table.

Further, controlling the vehicle to operate in the working condition and different motor output torques and vehicle speeds according to the first initial mapping relationship table, and when the vehicle operates, filtering the motor request torque of the motor by taking the preset filtering velocity V' in the first initial mapping relationship table corresponding to the motor output torque and the vehicle speed of the operating vehicle as the filtering gradient, to obtain the first filtering result, may include:

controlling the vehicle to operate by traversing all motor output torques and vehicle speeds in the first initial mapping relationship table in the working condition, and filtering the motor request torque of the motor by taking the preset filtering velocity V' in the first initial mapping relationship table corresponding to the motor output torque and the vehicle speed in the operation of the vehicle as the filtering gradient; and

receiving vehicle running comfort fed back from a tester after filtering conducted in each mapping relationship in the first initial mapping relationship table, and taking the comfort as the first filtering result.

Judging whether the preset filtering velocity V' in the first initial mapping relationship table needs to be modified according to the first filtering result, includes:

judging whether the first filtering result meets first preset comfort;

when judging that the first preset comfort is met, determining that the preset filtering velocity V' does not need to be modified; and

when judging that the first preset comfort is not met, determining that the preset filtering velocity V' needs to be modified.

Further, the driving mode may include a pure electric driving mode, a serial driving mode or a parallel driving mode;

the first mapping relationship table in each working condition when the vehicle is in the pure electric driving mode in the current filtering cycle is the same as the first mapping relationship table in a corresponding working condition when the vehicle is in the serial driving mode in the current filtering cycle;

the second mapping relationship table in each working condition when the vehicle is in the pure electric driving mode in the current filtering cycle is the same as the second mapping relationship table in a corresponding working condition when the vehicle is in the serial driving mode in the current filtering cycle;

the first mapping relationship table in each working condition when the vehicle is in the parallel driving mode in the current filtering cycle is different from the first mapping relationship table in a corresponding working condition when the vehicle is in the pure electric driving mode or the serial driving mode in the current filtering cycle; and

the second mapping relationship table in each working condition when the vehicle is in the parallel driving mode in the current filtering cycle is different from the second mapping relationship table in a corresponding working condition when the vehicle is in the pure electric driving mode or the serial driving mode in the current filtering cycle.

Further, the current working condition of the vehicle also includes at least one of the following: a pedaling working condition, a pedal release working condition, a torque over-zero working condition, and a full throttle acceleration working condition.

In addition, the first mapping relationship table corresponding to the current working condition being the torque over-zero working condition is different from the first mapping relationship table corresponding to the current working condition being any working condition other than the torque over-zero working condition, and the second mapping relationship table corresponding to the current working condition being the torque over-zero working condition is different from the second mapping relationship table corresponding to the current working condition being any working condition other than the torque over-zero working condition.

Further, a method for determining that the current working condition of the vehicle is the pedaling working condition and the torque over-zero working condition may include the following steps:

determining that the vehicle is in the pedaling working condition when the accelerator pedal of the vehicle is pressed;

after determining that the vehicle is in the pedaling working condition, judging whether the motor output torque after filtering in a (P-2)th filtering cycle is smaller than a first preset output torque, the first preset output torque being smaller than zero, and a Pth filtering cycle being the current filtering cycle;

when the motor output torque in the (P-2)th filtering cycle is smaller than the first preset output torque, judging whether the motor request torque in a (P-1)th filtering cycle is greater than a first preset request torque and whether the motor output torque after filtering in the (P-1)th filtering cycle is greater than a second preset output torque, the first preset request torque being greater than zero, and the second preset output torque being smaller than or equal to the first preset output torque; and

when the motor request torque in the (P-1)th filtering cycle is greater than the first preset request torque, and the motor output torque after filtering in the (P-1)th filtering cycle is greater than the second preset output torque, determining that the motor is in the torque over-zero working condition in the current filtering cycle.

Further, a method for determining that the current working condition of the vehicle is the pedal release working condition and the torque over-zero working condition may include the following steps:

determining that the vehicle is in the pedal release working condition when the accelerator pedal of the vehicle is released;

after determining that the vehicle is in the pedal release working condition, judging whether the motor output torque after filtering in the (P-2)th filtering cycle is greater than a third preset output torque, the third preset output torque being greater than zero, and the Pth filtering cycle being the current filtering cycle;

when the motor output torque of the (P-2)th filtering cycle is greater than the third preset output torque, judging whether the motor request torque in the (P-1)th filtering cycle is smaller than a second preset request torque and whether the motor output torque after filtering in the (P-1)th filtering cycle is smaller than a fourth preset output torque, the second preset request torque being smaller than zero, and the fourth preset output torque being greater than or equal to the third preset output torque; and

when the motor request torque in the (P-1)th filtering cycle is smaller than the second preset request torque, and the motor output torque after filtering in the (P-1)th filtering cycle is smaller than the fourth preset output torque, determining that the motor is in the torque over-zero working condition in the current filtering cycle.

Further, determining the interpolation coefficient R may include the following steps:

selecting an interpolation coefficient determining method corresponding to the current working condition from multiple interpolation coefficient determining methods according to the current working condition of the vehicle; and determining the interpolation coefficient R according to the selected interpolation coefficient determining method.

Further, when the current working condition of the vehicle is the full throttle acceleration working condition, the selected interpolation coefficient determining method is directly determining that the interpolation coefficient R is equal to a preset fixed value.

Further, when the current working condition of the vehicle is not the full throttle acceleration working condition, the selected interpolation coefficient determining method includes the following steps:

looking up a preset third mapping relationship table corresponding to the current working condition, the third mapping relationship table storing mapping relationships of different motor request torques, vehicle speeds and interpolation coefficients R; and

determining the corresponding interpolation coefficient R from the third mapping relationship table according to the motor request torque and the vehicle speed in the current working condition.

Further, the third mapping relationship table in each working condition is calibrated in the following modes:

generating a second initial mapping relationship table of motor request torques, vehicle speeds and a preset coefficient R' in the working condition;

controlling the vehicle to operate in the working condition and different motor request torques and vehicle speeds according to the second initial mapping relationship table, and calculating a first initial filtering gradient $M_1$' by the formula $M_1$'=R'*$V_{max}$+(1-R') *$V_{min}$ according to the determined maximum filtering velocity $V_{max}$ and the minimum filtering velocity $V_{min}$ corresponding to different motor output torques and vehicle speeds and the preset coefficient R' corresponding to the different motor request torques and the vehicle speeds determined from the second initial mapping relationship table;

filtering the motor request torque of the motor in accordance with the first initial filtering gradient $M_1$' when the vehicle operates, to obtain a second filtering result; and

judging whether the preset coefficient R' in the second initial mapping relationship table needs to be modified according to the second filtering result; if so, modifying the preset coefficient R', and if not, maintaining the preset coefficient R', thereby calibrating the second initial mapping relationship table as the third mapping relationship table.

Further, filtering the motor request torque of the motor in accordance with the first filtering gradient $M_1$' when the vehicle operates, to obtain the second filtering result, includes:

filtering the motor request torque of the motor with the first initial filtering gradient $M_1$' when the vehicle operates by traversing all motor request torques and vehicle speeds in the second initial mapping relationship table; and receiving vehicle running comfort fed back from a tester after filtering conducted in each mapping relationship in the second initial mapping relationship table, and taking the comfort as the second filtering result.

Judging whether the preset coefficient R' in the second initial mapping relationship table needs to be modified according to the second filtering result, includes:

judging whether the second filtering result meets second preset comfort;

when judging that the second preset comfort is met, determining that the preset coefficient R' does not need to be modified; and

when judging that the second preset comfort is not met, determining that the preset coefficient R' needs to be modified.

Further, when the current working condition of the vehicle is the brake energy recovery working condition, the selected filtering strategy is a second filtering strategy, the second filtering strategy including the following steps:

looking up a corresponding preset fourth mapping relationship table in the brake energy recovery working condition, the fourth mapping relationship table storing a mapping relationship of a motor output torque, a vehicle speed and a second filtering gradient $M_2$;

determining a corresponding second filtering gradient $M_2$ from the fourth mapping relationship table according to the motor output torque and the vehicle speed; and

filtering the motor request torque of the motor in accordance with the second filtering gradient $M_2$.

Further, the fourth mapping relationship table is calibrated in the following modes:

generating a third initial mapping relationship table of the motor output torque, the vehicle speed and a second preset filtering gradient $M_2$' in the brake energy recovery working condition;

controlling the vehicle to operate in the brake energy recovery working condition and different motor output torques and vehicle speeds according to the third initial mapping relationship table, and when the vehicle operates, filtering the motor request torque of the motor with the second preset filtering gradient $M_2$' in the third initial mapping relationship table corresponding to the motor output torque and the vehicle speed of the operating vehicle, to obtain a third filtering result; and

judging whether the second preset filtering gradient $M_2$' in the third initial mapping relationship table needs to be modified according to the third filtering result; if so, modifying the second preset filtering gradient $M_2$', and if not, maintaining the second preset filtering gradient $M_2$', thereby calibrating the third initial mapping relationship table as the fourth mapping relationship table.

Further, controlling the vehicle to operate in the brake energy recovery working condition and different motor output torques and vehicle speeds according to the third initial mapping relationship table, and when the vehicle operates, filtering the motor request torque of the motor with the second preset filtering gradient $M_2$' in the third initial mapping relationship table corresponding to the motor output torque and the vehicle speed of the operating vehicle, to obtain the third filtering result, includes:

controlling the vehicle to operate by traversing all motor output torques and vehicle speeds in the third initial mapping relationship table in the brake energy recovery working condition, and filtering the motor request torque of the motor with the second preset filtering gradient $M_2$' in the third initial mapping relationship table corresponding to the motor output torque and the vehicle speed in the operation of the vehicle; and

receiving vehicle running comfort fed back from a tester after filtering conducted in each mapping relationship in the third initial mapping relationship table, and taking the comfort as the third filtering result.

Judging whether the second preset filtering gradient $M_2$' in the third initial mapping relationship table needs to be modified according to the third filtering result, includes:

judging whether the third filtering result meets third preset comfort;

when judging that the third preset comfort is met, determining that the second preset filtering gradient $M_2$' does not need to be modified; and

when judging that the third preset comfort is not met, determining that the second preset filtering gradient $M_2$' needs to be modified.

Specifically, the present invention also provides a motor torque filtering control system for a hybrid electric vehicle, including a control apparatus, the control apparatus including a memory and a processor, a control program being stored in the memory, and the control program being used to implement the motor torque filtering control method mentioned above when executed by the processor.

Specifically, the present invention also provides a hybrid electric vehicle, including the motor torque filtering control system.

According to the technical solution of the embodiments of the present invention, a filtering strategy corresponding to a current working condition can be selected according to the current working condition of a vehicle, to filter a motor request torque. When the current working condition of the vehicle is not a brake energy recovery working condition, a maximum filtering velocity $V_{max}$ and a minimum filtering velocity $V_{min}$ are determined with a driving mode and a vehicle speed in a current filtering cycle and a motor output torque after filtering in a previous filtering cycle, subsequently an interpolation coefficient R is determined, then a first filtering gradient $M_1$ is calculated by a formulate $M_1=R*V_{max}+(1-R)*V_{min}$, and finally the motor request torque is filtered according to the first filtering gradient $M_1$. Since the first filtering gradient is related to all of driving modes and vehicle speeds of a current filtering cycle, a motor request torque before filtering in the current filtering cycle and a motor output torque after filtering in a previous filtering cycle, a filtering gradient of the current filtering cycle can be rapidly and precisely adjusted, to ensure that the vehicle runs smoothly without impact, and improve the riding comfort of a passenger.

Further, when the vehicle is in the brake energy recovery working condition, the motor torque filtering control method may look up a table according to the motor output torque and the vehicle speed to obtain a second filtering gradient $M_2$, and filter the motor request torque according to the second filtering gradient $M_2$. The table emphasizes transition from an over-zero area to a non-over-zero area, thereby ensuring that the vehicle has no over-zero impact in the over-zero area, and mainly ensuring the following performance of a regen request in the non-over-zero area, so that the regen request can be responded as fast as possible on the basis of ensuring smoothness without impact, thereby reducing fuel consumption.

The above description is only an overview of the technical solution of the present invention. To understand more clearly the technical means of the present invention, to implement in accordance with the contents of the specification, and to make the above and other purposes, features and advantages of the present invention more obvious and understandable, specific embodiments of the present invention are described below.

According to detailed description of specific embodiments of the present invention with the combination of drawings, the above and other objects, advantages and features of the present invention will be better understood by those skilled in the art.

## BRIEF DESCRIPTION OF THE DRAWINGS

Some specific embodiments of the present invention will be described later in detail in an exemplary and non-limiting manner with reference to the drawings. Identical reference numerals in the drawings indicate identical or similar components or parts. It shall be understood by those skilled in the art that these drawings are not necessarily drawn to scale. In drawings:

FIG. 1 shows a structural schematic diagram of a conventional dual-motor hybrid power system;
FIG. 2 shows a schematic block diagram of a torque path of a conventional dual-motor hybrid power system;
FIG. 3 shows a schematic flowchart of a motor torque filtering control method according to an embodiment of the present invention;
FIG. 4 shows a schematic flowchart of a motor torque filtering control method for a vehicle in a brake energy recovery working condition according to an embodiment of the present invention;
FIG. 5 shows a schematic flowchart of a method for determining a torque over-zero working condition in a pedaling working condition according to an embodiment of the present invention;
FIG. 6 shows a schematic flowchart of a method for determining a maximum filtering velocity $V_{max}$ and a minimum filtering velocity $V_{min}$ according to an embodiment of the present invention;
FIG. 7 shows a schematic flowchart of a method for calibrating each of a first mapping relationship table and a second mapping relationship table in each working condition according to an embodiment of the present invention;
FIG. 8 shows a schematic flowchart of a method for determining a first filtering result related in step S2 in FIG. 7;
FIG. 9 shows a schematic flowchart of a method for judging whether a preset filtering velocity V' in a first initial mapping relationship table needs to be modified related in step S3 in FIG. 7;
FIG. 10 shows a schematic flowchart of a method for determining an interpolation coefficient R related in step S203 in FIG. 3;
FIG. 11 shows a schematic flowchart of a method for calibrating a third mapping relationship table in each working condition according to an embodiment of the present invention;
FIG. 12 shows a schematic flowchart of a method for determining a second filtering result related in step S233 in FIG. 11;
FIG. 13 shows a schematic flowchart of a method for calibrating a fourth mapping relationship table related in step S210 in FIG. 4;
FIG. 14 shows a schematic flowchart of a method for determining a third filtering result related in step S2102 in FIG. 13;
FIG. 15 shows a schematic flowchart of a method for judging whether a second preset filtering gradient $M_2'$ in a third initial mapping relationship table needs to be modified related in step S2103 in FIG. 13; and

FIG. 16 shows a schematic flowchart of a method for determining whether a motor is in a torque over-zero working condition in a current filtering cycle according to an embodiment III of the present invention.

## DETAILED DESCRIPTION

Exemplary embodiments of the present invention will be described in greater detail below with reference to the drawings. Although exemplary embodiments of the present invention are shown in the drawings, it shall be understood that the present invention can be implemented in various forms and shall not be confined by the embodiments elaborated herein. On the contrary, these embodiments are provided to enable a more thorough understanding of the present invention and to enable the complete scope of the present invention to be communicated to those skilled in the art.

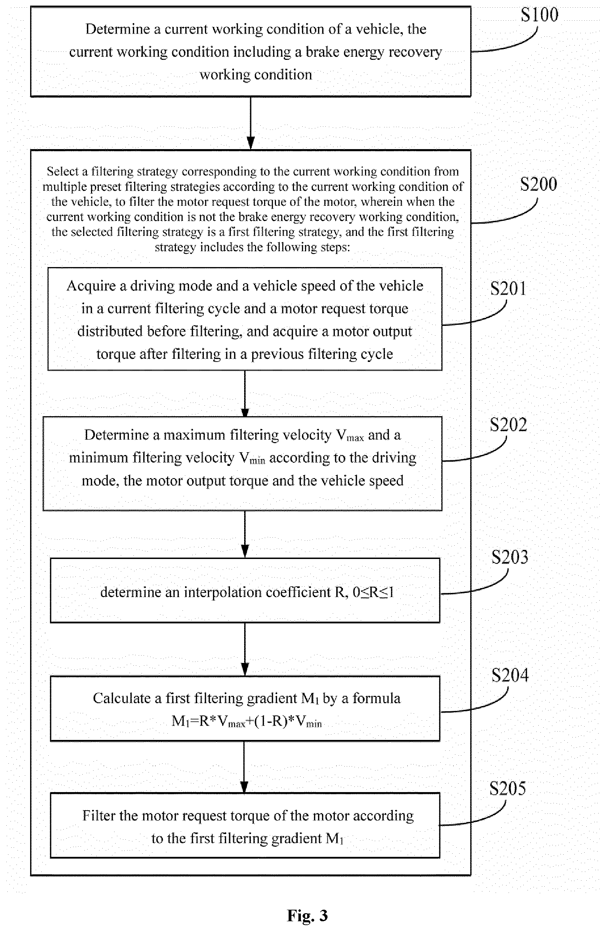

FIG. 3 shows a schematic flowchart of a motor torque filtering control method according to an embodiment of the present invention. The motor torque filtering control method is used for filtering a motor request torque of a hybrid electric vehicle, particularly for a hybrid electric vehicle of a dual-motor structure. The motor torque filtering control method includes:

> step S100, a current working condition of a vehicle is determined, the current working condition including a brake energy recovery working condition;
> step S200, a filtering strategy corresponding to the current working condition is selected from multiple preset filtering strategies according to the current working condition of the vehicle, to filter the motor request torque of the motor, wherein when the current working condition is not the brake energy recovery working condition, the selected filtering strategy is a first filtering strategy, and the first filtering strategy includes the following steps:

>> step S201, a driving mode and a vehicle speed of the vehicle in a current filtering cycle and a motor request torque distributed before filtering are acquired, and a motor output torque after filtering in a previous filtering cycle is acquired;
>> step S202, a maximum filtering velocity $V_{max}$ and a minimum filtering velocity $V_{min}$ are determined according to the driving mode, the motor output torque and the vehicle speed;
>> step S203, an interpolation coefficient R is determined, $0 \leq R \leq 1$;
>> step S204, a first filtering gradient $M_1$ is calculated by a formula $M_1 = R*V_{max} + (1-R)*V_{min}$; and
>> step S205, the motor request torque of the motor is filtered according to the first filtering gradient $M_1$.

According to the technical solution of the embodiment of the present invention, a filtering strategy corresponding to a current working condition can be selected according to the current working condition of a vehicle, to filter a motor request torque. When the current working condition of the vehicle is not a brake energy recovery working condition, the maximum filtering velocity $V_{max}$ and the minimum filtering velocity $V_{min}$ are determined with a driving mode and a vehicle speed in a current filtering cycle and a motor output torque after filtering in a previous filtering cycle, subsequently an interpolation coefficient R is determined, then a first filtering gradient $M_1$ is calculated by a formulate $M_1 = R*V_{max} + (1-R)*V_{min}$, and finally the motor request torque is filtered according to the first filtering gradient $M_1$. Since the first filtering gradient is related to all of the driving mode and the vehicle speed of the current filtering cycle, the motor request torque before filtering in the current filtering cycle and the motor output torque after filtering in the previous filtering cycle, the filtering gradient of the current filtering cycle can be rapidly and precisely adjusted, to ensure that the vehicle runs smoothly without impact, and improve the riding comfort of a passenger.

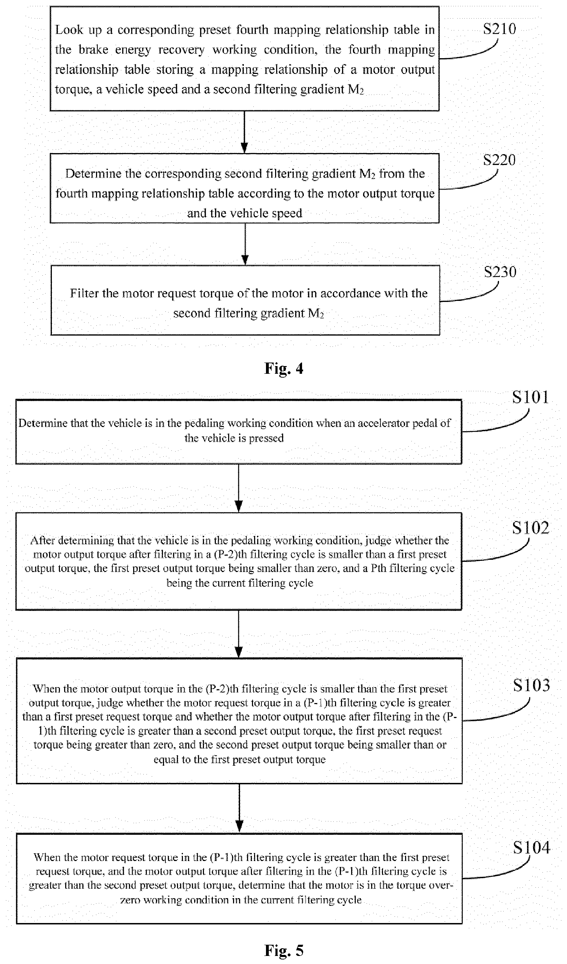

When the vehicle is in the brake energy recovery working condition, the selected filtering strategy is a second filtering strategy, and as shown in FIG. 4, the second filtering strategy includes:

> step S210, a corresponding preset fourth mapping relationship table in the brake energy recovery working condition is looked up, the fourth mapping relationship table storing a mapping relationship of a motor output torque, a vehicle speed and a second filtering gradient $M_2$;
> step S220, the corresponding second filtering gradient $M_2$ is determined from the fourth mapping relationship table according to the motor output torque and the vehicle speed; and
> step S230, the motor request torque of the motor is filtered in accordance with the second filtering gradient $M_2$.

In step S210, the fourth mapping relationship table emphasizes transition from an over-zero area to a non-over-zero area. The value of a filtering gradient set in the over-zero area is smaller than the value in the non-over-zero area, thereby avoiding over-zero impact. In the non-over-zero area, the filtering gradient is set in the principle of mainly ensuring the following performance of a regen request.

According to the solution of the embodiment of the present invention, when the vehicle is in the brake energy recovery working condition, the motor torque filtering control method may look up a table according to the motor output torque and the vehicle speed to obtain a second filtering gradient $M_2$, and filter the motor request torque according to the second filtering gradient $M_2$. The table emphasizes transition from an over-zero area to a non-over-zero area, thereby ensuring that the vehicle has no over-zero impact in the over-zero area, and mainly ensures the following performance of a regen request in the non-over-zero area, so that the regen request can be responded as fast as possible on the basis of ensuring smoothness without impact, thereby reducing fuel consumption.

Hereinafter, the present invention is described in detail in combination with specific examples:

Embodiment I:

Both in a pedaling working condition and a pedal release working condition, the vehicle has common working conditions and special working conditions, the special working conditions include a brake energy recovery working condition, a torque over-zero working condition, a full throttle acceleration working condition, and a current driving mode being a parallel driving mode. In various common working conditions and special working conditions corresponding to the pedaling working condition, and various common working conditions and special working conditions corresponding to the pedal release working condition, values of filtering gradients are different.

In this embodiment, a novel motor torque filtering control method is disclosed for only various corresponding common working conditions and special working conditions except for the brake energy recovery working condition in the pedaling working condition.

In the pedaling working condition, a method of the step S 100 to the step S200 is adopted when the vehicle is in other working conditions than the brake energy recovery working condition, and the first filtering strategy, namely step S201 to step S205, is adopted. Filtering is conducted in accordance with modes in the prior art when the vehicle is in the brake energy recovery working condition.

When the vehicle is in a common working condition, valuing modes for $V_{max}$, $V_{min}$ and R in the formula $M_1 = R*V_{max} + (1-R)*V_{min}$ are the same. The common working conditions include that a current vehicle running mode is a pure electric driving mode and a serial driving mode. When the vehicle is in a special working condition in other working conditions than the brake energy recovery working condition, such as the over-zero working condition, the full throttle acceleration working condition, and the current driving mode being a parallel driving mode, valuing modes for $V_{max}$, $V_{min}$ and R in the formula $M_1 = R*V_{max} + (1-R)*V_{min}$ are different.

Valuing modes for parameters $V_{max}$, $V_{min}$ and R in various common working conditions and special working conditions other than the brake energy recovery working condition in the pedaling working condition are specifically described below.

In the step S 100, on how to determine the current working condition of the vehicle, a method in the prior art can be used as a determining method. However, a following method provided by the embodiment of the present invention can be used as a method for determining the torque over-zero working condition in the pedaling working condition, and as shown in FIG. 5, the method for determining the torque over-zero working condition in the pedaling working condition includes:

> step S101, it is determined that the vehicle is in the pedaling working condition when an accelerator pedal of the vehicle is pressed;
> step S102, after determining that the vehicle is in the pedaling working condition, whether the motor output torque after filtering in a (P-2)th filtering cycle is smaller than a first preset output torque is judged, the first preset output torque being smaller than zero, and a Pth filtering cycle being the current filtering cycle;
> step S103, when the motor output torque in the (P-2)th filtering cycle is smaller than the first preset output torque, whether the motor request torque in a (P-1)th filtering cycle is greater than a first preset request torque and whether the motor output torque after filtering in the (P-1)th filtering cycle is greater than a second preset output torque are determined, the first preset request torque being greater than zero, and the second preset output torque being smaller than or equal to the first preset output torque; and
> step S104, when the motor request torque in the (P-1)th filtering cycle is greater than the first preset request torque, and the motor output torque after filtering in the (P-1)th filtering cycle is greater than the second preset output torque, it is determined that the motor is in the torque over-zero working condition in the current filtering cycle.

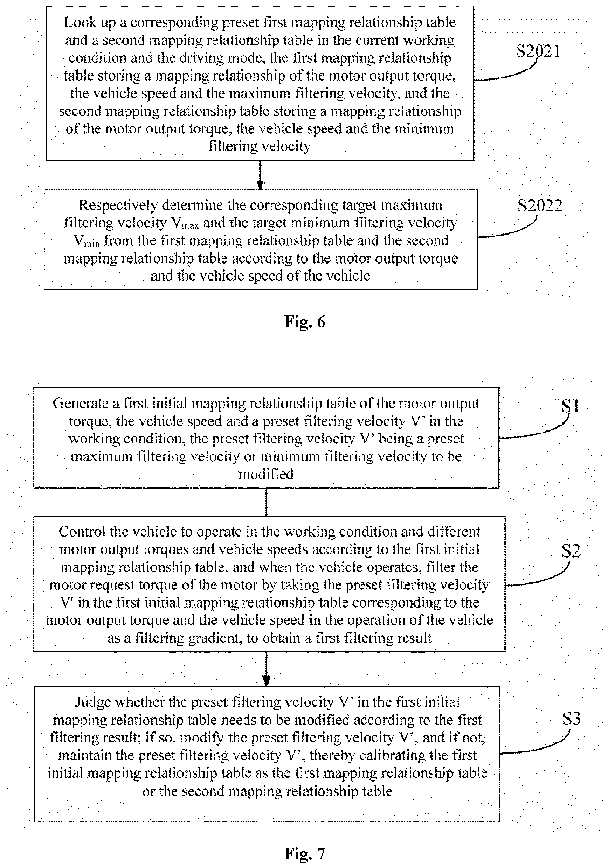

A method for valuing the maximum filtering velocity $V_{max}$ and the minimum filtering velocity $V_{min}$ in the above step S202 is described below, and as shown in FIG. 6, the maximum filtering velocity $V_{max}$ and the minimum filtering velocity $V_{min}$ are valued by the following steps:

> step S2021, a corresponding preset first mapping relationship table and a second mapping relationship table in the current working condition and the driving mode are looked up; the first mapping relationship table storing a mapping relationship of the motor output torque, the vehicle speed and the maximum filtering velocity, and the second mapping relationship table storing a mapping relationship of the motor output torque, the vehicle speed and the minimum filtering velocity; and

step S2022, the corresponding target maximum filtering velocity $V_{max}$ and the target minimum filtering velocity $V_{min}$ are determined respectively from the first mapping relationship table and the second mapping relationship table according to the motor output torque and the vehicle speed of the vehicle.

In specific implementation, as shown in FIG. 7, each of the first mapping relationship table and the second mapping relationship table in each working condition is calibrated in the following modes:

step S 1, a first initial mapping relationship table of the motor output torque, the vehicle speed and a preset filtering velocity V' in the working condition is generated, the preset filtering velocity V' being a preset maximum filtering velocity or minimum filtering velocity to be modified;
step S2, the vehicle is controlled to operate in the working condition and different motor output torques and vehicle speeds according to the first initial mapping relationship table, and when the vehicle operates, the motor request torque of the motor is filtered by taking the preset filtering velocity V' in the first initial mapping relationship table corresponding to the motor output torque and the vehicle speed in the operation of the vehicle as a filtering gradient, to obtain a first filtering result; and
step S3, whether the preset filtering velocity V' in the first initial mapping relationship table needs to be modified is judged according to the first filtering result; if so, the preset filtering velocity V' is modified, and if not, the preset filtering velocity V' is maintained, thereby calibrating the first initial mapping relationship table as the first mapping relationship table or the second mapping relationship table.

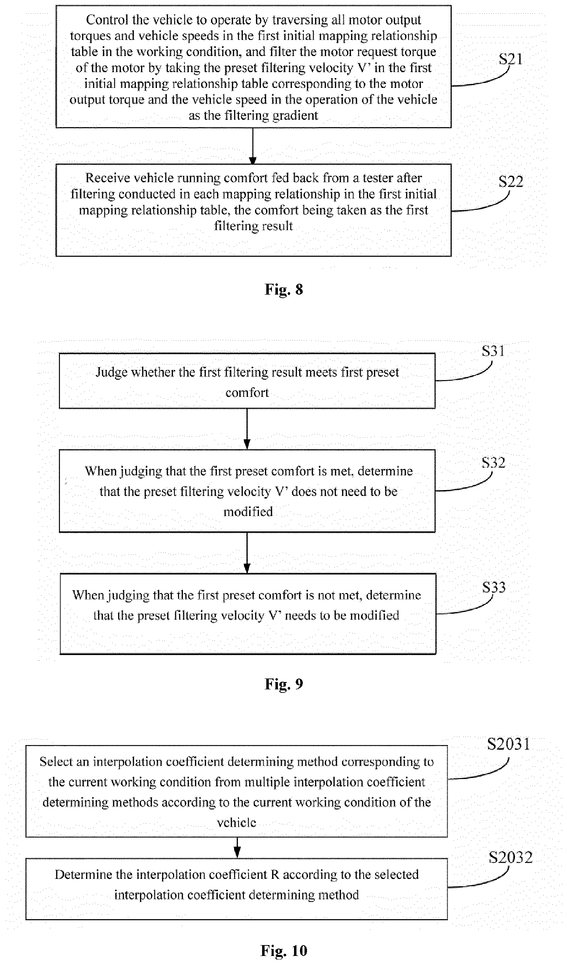

As shown in FIG. 8, the step S2 includes:

step S21, the vehicle is controlled to operate by traversing all motor output torques and vehicle speeds in the first initial mapping relationship table in the working condition, and the motor request torque of the motor is filtered by taking the preset filtering velocity V' in the first initial mapping relationship table corresponding to the motor output torque and the vehicle speed in operation of the vehicle as the filtering gradient; and
step S22, vehicle running comfort fed back from a tester after filtering conducted in each mapping relationship in the first initial mapping relationship table is received, and the comfort is taken as the first filtering result.

In the step S21, different working conditions of the vehicle can be achieved by selecting specific driving modes and driving gears.

As shown in FIG. 9, the above step S3 includes:

step S31, whether the first filtering result meets first preset comfort is judged;
step S32, when judging that the first preset comfort is met, it is determined that the preset filtering velocity V' does not need to be modified; and
step S33, when judging that the first preset comfort is not met, it is determined that the preset filtering velocity V' needs to be modified.

In the above step S2021, the first mapping relationship table in each working condition when the vehicle is in the pure electric driving mode in the current filtering cycle is the same as the first mapping relationship table in a corresponding working condition when the vehicle is in the serial driving mode in the current filtering cycle. The second mapping relationship table in each working condition when the vehicle is in the pure electric driving mode in the current filtering cycle is the same as the second mapping relationship table in a corresponding working condition when the vehicle is in the serial driving mode in the current filtering cycle. The first mapping relationship table in each working condition when the vehicle is in the parallel driving mode in the current filtering cycle is different from the first mapping relationship table in a corresponding working condition when the vehicle is in the pure electric driving mode or the serial driving mode in the current filtering cycle. The second mapping relationship table in each working condition when the vehicle is in the parallel driving mode in the current filtering cycle is different from the second mapping relationship table in a corresponding working condition when the vehicle is in the pure electric driving mode or the serial driving mode in the current filtering cycle.

In addition, the first mapping relationship table corresponding to the current working condition being the torque over-zero working condition is different from the first mapping relationship table corresponding to the current working condition being any working condition other than the torque over-zero working condition, and the second mapping relationship table corresponding to the current working condition being the torque over-zero working condition is different from the second mapping relationship table corresponding to the current working condition being any working condition other than the torque over-zero working condition.

The method for determining the interpolation coefficient R in the step S203 is described below, and as shown in FIG. 10, the method for determining the interpolation coefficient R includes:

step S2031, an interpolation coefficient determining method corresponding to the current working condition is selected from multiple interpolation coefficient determining methods according to the current working condition of the vehicle; and

step S2032, the interpolation coefficient R is determined according to the selected interpolation coefficient determining method.

In the step S2031, when the current working condition of the vehicle is the full throttle acceleration working condition, the selected interpolation coefficient determining method is directly determining that the interpolation coefficient R is equal to a preset fixed value. The preset fixed value, for example, may be 0.9, 0.95 or 1 and the like, preferably 1.

In the step S2031, when the current working condition of the vehicle is in a non-full throttle acceleration working condition, the selected interpolation coefficient determining method includes the following steps: looking up a corresponding preset third mapping relationship table in the current working condition, the third mapping relationship table storing a mapping relationship of different motor request torques, vehicle speeds and interpolation coefficients R; and determining a corresponding interpolation coefficient R from the third mapping relationship table according to the motor request torque and the vehicle speed.

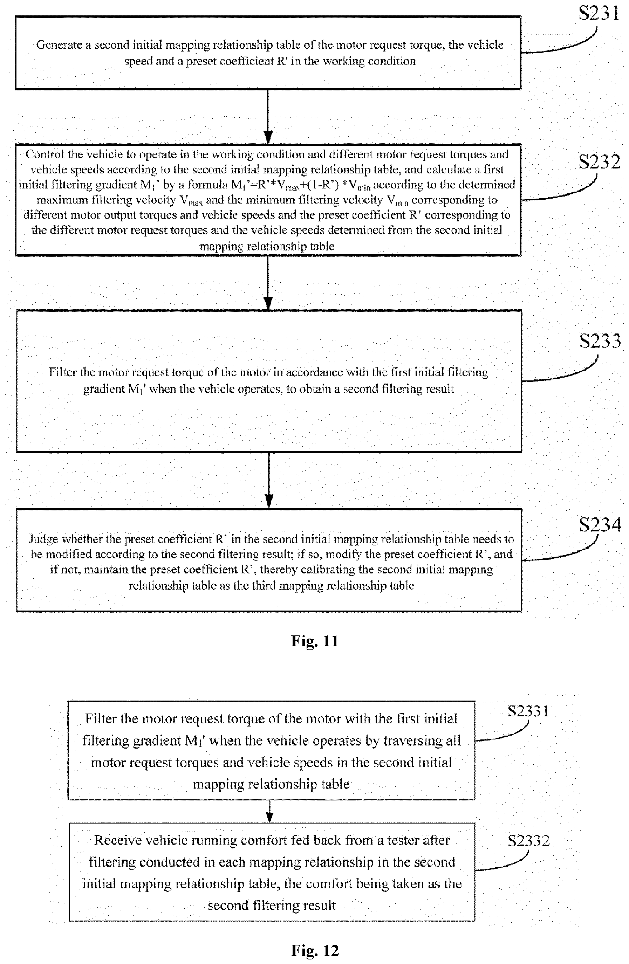

As shown in FIG. 11, the third mapping relationship table in each working condition is calibrated in the following modes:

step S231, a second initial mapping relationship table of the motor request torque, the vehicle speed and a preset coefficient R' in the working condition is generated;

step S232, the vehicle is controlled to operate in the working condition and different motor request torques and vehicle speeds according to the second initial mapping relationship table, and a first initial filtering gradient $M_1'$ is calculated by a formula $M_1'=R'*V_{max}+(1-R')*V_{min}$ according to the determined maximum filtering velocity $V_{max}$ and the minimum filtering velocity $V_{min}$ corresponding to different motor output torques and vehicle speeds and the preset coefficient R' corresponding to the different motor request torques and the vehicle speeds determined from the second initial mapping relationship table;

step S233, the motor request torque of the motor is filtered in accordance with the first initial filtering gradient $M_1'$ when the vehicle operates, to obtain a second filtering result; and

step S234, whether the preset coefficient R' in the second initial mapping relationship table needs to be modified is judged according to the second filtering result; if so, the preset coefficient R' is modified, and if not, the preset coefficient R' is maintained, thereby calibrating the second initial mapping relationship table as the third mapping relationship table.

As shown in FIG. 12, the above step S233 includes:

step S2331, the motor request torque of the motor is filtered with the first initial filtering gradient $M_1'$ when the vehicle operates by traversing all motor request torques and vehicle speeds in the second initial mapping relationship table; and

step S2332, vehicle running comfort fed back from a tester after filtering conducted in each mapping relationship in the second initial mapping relationship table is received, the comfort being taken as the second filtering result.

In the step S234, that whether the preset coefficient R' in the second initial mapping relationship table needs to be modified is judged according to the second filtering result, includes:

whether the second filtering result meets second preset comfort is judged;

when judging that the second preset comfort is met, it is determined that the preset coefficient R' does not need to be modified; and

when judging that the second preset comfort is not met, it is determined that the preset coefficient R' needs to be modified.

Filtering gradients in the common working conditions and the special working conditions other than the brake energy recovery working condition under the pedaling working condition are described below one by one:

I. Common working condition

1) Determination of the maximum filtering velocity $V_{max}$

The preset filtering velocity V' corresponding to each motor output torque and vehicle speed in the first initial mapping relationship table is set as 9000 Nm/s, the preset filtering velocity V' is a preset maximum filtering velocity $V_{max}$ to be modified, and the first initial mapping relationship table, for example, may be shown in the table 1 below:

| Table 1 | | | | | | | | |
|---|---|---|---|---|---|---|---|---|
| y\x | -300 | -30 | -16 | -5 | 4 | 20 | 50 | 300 |
| 0 | 9000 | 9000 | 9000 | 9000 | 9000 | 9000 | 9000 | 9000 |
| 6 | 9000 | 9000 | 9000 | 9000 | 9000 | 9000 | 9000 | 9000 |
| 12 | 9000 | 9000 | 9000 | 9000 | 9000 | 9000 | 9000 | 9000 |
| 20 | 9000 | 9000 | 9000 | 9000 | 9000 | 9000 | 9000 | 9000 |
| 30 | 9000 | 9000 | 9000 | 9000 | 9000 | 9000 | 9000 | 9000 |
| 50 | 9000 | 9000 | 9000 | 9000 | 9000 | 9000 | 9000 | 9000 |
| 76 | 9000 | 9000 | 9000 | 9000 | 9000 | 9000 | 9000 | 9000 |
| 150 | 9000 | 9000 | 9000 | 9000 | 9000 | 9000 | 9000 | 9000 |
| x in the table 1 represents the motor output torque, in Nm, y represents the vehicle speed, in km/h, and the output value is the preset filtering velocity V', in Nm/s. | | | | | | | | |

The first initial mapping relationship table is calibrated as the first mapping relationship table by the step S1 to the step S3, and the preset filtering velocity V' is modified by the step S21 to the step S22 and the step S31 to the step S33. If it is determined that the preset filtering velocity V' needs to be modified, the preset filtering velocity V' is modified into a corresponding maximum filtering velocity $V_{max}$. If it is determined that the preset filtering velocity V' does not need to be modified, the preset filtering velocity V' can be used as the corresponding maximum filtering velocity $V_{max}$, and the first initial mapping relationship table is modified as the first mapping relationship table, and the first mapping relationship table, for example, is shown in the table 2 below:

| Table 2 | | | | | | | | |
|---|---|---|---|---|---|---|---|---|
| y\x | -300 | -30 | -16 | -5 | 4 | 20 | 50 | 300 |
| 0 | 8990 | 8997 | 9000 | 9010 | 8993 | 8992 | 8996 | 9005 |
| 6 | 8990 | 8997 | 9000 | 9010 | 8993 | 8992 | 8996 | 9001 |
| 12 | 8990 | 8997 | 9000 | 9010 | 8993 | 8992 | 8996 | 9002 |
| 20 | 8990 | 8997 | 9000 | 9010 | 8993 | 8992 | 8996 | 8995 |
| 30 | 8998 | 9004 | 9000 | 9003 | 8999 | 9003 | 8993 | 9004 |
| 50 | 8999 | 9004 | 9000 | 9003 | 8999 | 9003 | 8993 | 9004 |
| 76 | 8998 | 9004 | 9000 | 9003 | 8999 | 9003 | 8993 | 9004 |
| 150 | 8998 | 9004 | 9000 | 9003 | 8999 | 9003 | 8993 | 9004 |
| x in table 2 represents the motor output torque, in Nm, y represents the vehicle speed, in km/h, and the output value is the corresponding maximum filtering velocity $V_{max}$, in Nm/s. | | | | | | | | |

2) Determination of the minimum filtering velocity $V_{min}$

The preset filtering velocity V' corresponding to each motor output torque and vehicle speed in the first initial mapping relationship table is a minimum filtering velocity $V_{min}$ to be modified, and the first initial mapping relationship table, for example, may be shown in the table 3 below:

Table 3

| y\x | -300 | -100 | -80 | -30 | 30 | 80 | 250 | 500 |
|---|---|---|---|---|---|---|---|---|
| 0 | 700 | 450 | 450 | 450 | 450 | 1000 | 1000 | 1400 |
| 6 | 700 | 450 | 450 | 450 | 450 | 1000 | 1000 | 1400 |
| 12 | 700 | 450 | 450 | 450 | 450 | 1000 | 1000 | 1400 |
| 20 | 700 | 450 | 450 | 450 | 450 | 1000 | 1000 | 1400 |
| 30 | 1000 | 1000 | 1000 | 1000 | 1000 | 1000 | 1000 | 1800 |
| 50 | 1000 | 1000 | 1000 | 1000 | 1000 | 1000 | 1000 | 1800 |
| 66 | 1000 | 1000 | 1000 | 1000 | 1000 | 1000 | 1000 | 1800 |
| 80 | 1000 | 1000 | 1000 | 1000 | 1000 | 1000 | 1000 | 1800 |
| x in the table 3 represents the motor output torque, in Nm, y represents the vehicle speed, in km/h, and the output value is the preset filtering velocity V', in Nm/s. | | | | | | | | |

The first initial mapping relationship table is calibrated as a second mapping relationship table by the step S1 to the step S3, and the preset filtering velocity V' is modified by the step S21 to the step S22 and the step S31 to the step S33. If it is determined that the preset filtering velocity V' needs to be modified, the preset filtering velocity V' is modified into a corresponding minimum filtering velocity $V_{min}$. If it is determined that the preset filtering velocity V' does not need to be modified, the preset filtering velocity V' can be used as the corresponding minimum filtering velocity $V_{min}$, and the first initial mapping relationship table is modified as the second mapping relationship table.

In modification, it should be ensured that when the interpolation coefficient R=0, the vehicle is smooth without impact at different vehicle speeds. Attention shall be paid to that the minimum filtering velocity $V_{min}$ at a point of an over-zero motor output torque is appropriately reduced on the basis of the minimum filtering velocity $V_{min}$ at a point of a non-over-zero torque, the impact intensity is felt, and the minimum filtering velocity $V_{min}$ at the point of over-zero torque is gradually increased, till there is the tendency of impact. Attention shall be paid to a torque filtering area at a low creep speed, to avoid that a creep torque is filtered because of a too small setting.

The second mapping relationship table, for example, is shown in the table 4 below:

Table 4

| y\x | -300 | -100 | -80 | -30 | 30 | 80 | 250 | 500 |
|---|---|---|---|---|---|---|---|---|
| 0 | 695 | 460 | 450 | 470 | 450 | 1030 | 1010 | 1360 |
| 6 | 695 | 460 | 450 | 470 | 450 | 1030 | 1010 | 1360 |
| 12 | 695 | 460 | 450 | 470 | 450 | 1030 | 1010 | 1360 |
| 20 | 695 | 460 | 450 | 470 | 450 | 1030 | 1010 | 1360 |
| 30 | 970 | 1000 | 1050 | 990 | 980 | 1010 | 1000 | 1700 |
| 50 | 970 | 1000 | 1050 | 990 | 980 | 1010 | 1000 | 1700 |
| 66 | 970 | 1000 | 1050 | 990 | 980 | 1010 | 1000 | 1700 |
| 80 | 970 | 1000 | 1050 | 990 | 980 | 1010 | 1000 | 1700 |
| x in the table 4 represents the motor output torque, in Nm, y represents the vehicle speed, in km/h, and the output value is the corresponding minimum filtering velocity $V_{min}$, in Nm/s. | | | | | | | | |

3) Determination of interpolation coefficient R

The interpolation coefficient R is calculated by the following steps: looking up a corresponding preset third mapping relationship table in the current working condition\, the third mapping relationship table storing a mapping relationship of different motor request torques, vehicle speeds and interpolation coefficients R; and determining a corresponding interpolation coefficient R from the third mapping relationship table according to the motor request torque and the vehicle speed. In addition, an interpolation coefficient to be modified is modified by the above step S231 to the step S234 and the step S2331 to the step S2332.

First, a preset coefficient R' corresponding to each motor request torque and vehicle speed in the second initial mapping relationship table is acquired, and the second initial mapping relationship table, for example, may be shown in the table 5 below:

Table 5

| y\x | -200 | 0 | 100 | 200 | 400 | 1000 | 1250 | 2000 |
|---|---|---|---|---|---|---|---|---|
| 2 | 0.0078125 | 0.0078125 | 0.0000000 | 0.0000000 | 0.0000000 | 0.0468750 | 0.0937500 | 0.2265625 |
| 6 | 0.0078125 | 0.0078125 | 0.0000000 | 0.0000000 | 0.0000000 | 0.0703125 | 0.0937500 | 0.2265625 |
| 10 | 0.0156250 | 0.0156250 | 0.0000000 | 0.0000000 | 0.0000000 | 0.0703125 | 0.0937500 | 0.1328125 |
| 14 | 0.0234375 | 0.0234375 | 0.0000000 | 0.0000000 | 0.0000000 | 0.0703125 | 0.0937500 | 0.1328125 |
| 30 | 0.0390625 | 0.0390625 | 0.0390625 | 0.0390625 | 0.0468750 | 0.0703125 | 0.0937500 | 0.1328125 |
| 50 | 0.0390625 | 0.0390625 | 0.0390625 | 0.0390625 | 0.0468750 | 0.1015625 | 0.1406250 | 0.2031250 |
| 66 | 0.0390625 | 0.0390625 | 0.0390625 | 0.0390625 | 0.0468750 | 0.1171875 | 0.1796875 | 0.2656250 |
| 80 | 0.0390625 | 0.0390625 | 0.0390625 | 0.0390625 | 0.0468750 | 0.1171875 | 0.1796875 | 0.2656250 |

x in the table 5 represents the motor request torque, in Nm, y represents the vehicle speed, in km/h, and the output value is the preset coefficient R'.

The bigger the value of the preset coefficient R' in the table 5 is, the less the filtering is, and more rapidly the torque increases. In modification, for example, tests are conducted in accordance with the following working condition A, continuous adjustment is conducted according to testing results, and calibration is conducted by scanning points, to ensure smooth acceleration at small and medium accelerator opening degrees, rapid response at a large accelerator opening degree, and no over-zero impact.

Working condition A: the gear is shifted gear D and a Hybrid mode (a fuel-electric hybrid driving mode) is selected, the vehicle speed is kept at 10 km/h, 20 km/h, 30 km/h, 40 km/h, 50 km/h, 60 km/h, 70 km/h and 80 km/h respectively, and the accelerator pedal is intermittently pressed to the small, medium and large accelerator opening degrees (small accelerator pedal opening degree: 10%-40%, medium accelerator pedal opening degree 40%-70%, and large accelerator pedal opening degree 70%-100%) respectively during a steady speed period, to accelerate for 5 s.

After modification, the second initial mapping relationship table is modified as a third mapping relationship table, and the third mapping relationship table, for example, is shown in table 6 below:

Table 6

| y\x | -200 | 0 | 100 | 200 | 400 | 1000 | 1250 | 2000 |
|---|---|---|---|---|---|---|---|---|
| 2 | 0.0079231 | 0.0078125 | 0.0001221 | 0.0000980 | 0.0000000 | 0.0476230 | 0.0937530 | 0.2267891 |
| 6 | 0.0077256 | 0.0078125 | 0.0001221 | 0.0000980 | 0.0000000 | 0.0714560 | 0.0937530 | 0.2267891 |
| 10 | 0.0163450 | 0.0161230 | 0.0001221 | 0.0000980 | 0.0000000 | 0.0713135 | 0.0937530 | 0.1328125 |
| 14 | 0.0234498 | 0.0236452 | 0.0001221 | 0.0000980 | 0.0000000 | 0.0713135 | 0.0937530 | 0.1328125 |
| 30 | 0.0395987 | 0.0397892 | 0.0393561 | 0.0393561 | 0.0468750 | 0.0713135 | 0.0937530 | 0.1328125 |
| 50 | 0.0393654 | 0.0397892 | 0.0393561 | 0.0393561 | 0.0468750 | 0.1015625 | 0.1406250 | 0.2056312 |
| 66 | 0.0398754 | 0.0397892 | 0.0393561 | 0.0393561 | 0.0468750 | 0.1171875 | 0.1796875 | 0.2674521 |
| 80 | 0.0398754 | 0.0397892 | 0.0393561 | 0.0393561 | 0.0468750 | 0.1171875 | 0.1796875 | 0.2674521 |

x in the table 6 represents the motor request torque, in Nm, y represents the vehicle speed, in km/h, and the output value is the interpolation coefficient R.

4) Determination of the first filtering gradient $M_1$

For example, if the motor output torque is -300 Nm, the vehicle speed is 50 km/h, and the motor request torque is -200 Nm, by looking up the tables, the corresponding maximum filtering velocity $V_{max}$ is 8999 Nm/s, the minimum

filtering velocity $V_{min}$ is 1000 Nm/s, and the interpolation coefficient R is 0.0393654, therefore, calculation is conducted by the formula $M_1=R*V_{max}+(1-R)*V_{min}$ to obtain $M_1$, and $M_1$ is 1314.8838346 Nm/s. Therefore, in the common working condition, the motor request torque is filtered in accordance with the filtering gradient 1314.8838346 Nm/s.

II. Over-zero torque working condition

The difference between the over-zero torque working condition and the common working condition lies in different values of the maximum filtering velocity $V_{max}$ and the minimum filtering velocity $V_{min}$ (but the valuing methods are the same, they are valued by the step S1 to the step S3, and the preset filtering velocity V' is modified by the step S21 to the step S22 and the step S31 to the step S33). In the working condition, calibration thereof mainly considers transition from the over-zero area to the non-over-zero area, the velocity shall be gentle in the over-zero area to reduce over-zero impact, and shall be rapid in the non-over-zero area to mainly ensure the following performance of the regen request.

In the motor torque filtering process, over-zero recognition shall be conducted in each filtering cycle. A recognition method, i.e. a method of determining whether the motor is in the torque over-zero working condition in the current filtering cycle, as shown in FIG. 5, includes the step S101 to the step S104. In the step S102, the first preset output torque, for example, may be -10 Nm. In step S103, the first preset request torque, for example, may be 10 Nm. In step S104, the second preset output torque, for example, may be -25 Nm.

1) Determination of the maximum filtering velocity $V_{max}$

When judging that the motor is currently in the torque over-zero working condition, after modified, the first mapping relationship table (the first initial mapping relationship table, that is, a table before modification is omitted herein), for example, may be shown in the table 7 below:

Table 7

| y\x | -150 | -100 | -50 | -20 | 20 | 50 | 100 | 150 |
|---|---|---|---|---|---|---|---|---|
| 0 | 100000 | 70000 | 70000 | 6000 | 6000 | 560000 | 560000 | 100000 |
| 20 | 100000 | 70000 | 70000 | 6000 | 6000 | 560000 | 560000 | 100000 |
| 40 | 100000 | 70000 | 70000 | 6000 | 6000 | 560000 | 560000 | 100000 |
| 60 | 100000 | 70000 | 70000 | 6000 | 6000 | 560000 | 560000 | 100000 |
| 80 | 100000 | 70000 | 70000 | 6000 | 6000 | 560000 | 560000 | 100000 |
| 100 | 100000 | 70000 | 70000 | 6000 | 6000 | 560000 | 560000 | 100000 |
| 150 | 100000 | 70000 | 70000 | 6000 | 6000 | 560000 | 560000 | 100000 |
| 300 | 100000 | 70000 | 70000 | 6000 | 6000 | 560000 | 560000 | 100000 |

x in the table 7 represents the motor output torque, in Nm, y represents the vehicle speed, in km/h, and the output value is the corresponding maximum filtering velocity $V_{max}$, in Nm/s.

2) Determination of the minimum filtering velocity $V_{min}$

When judging that the motor is currently in the torque over-zero working condition, after modified, the second mapping relationship table (the first initial mapping relationship table, that is, a table before modification is omitted herein), for example, may be shown in the table 8 below:

Table 8

| y\x | -200 | -100 | -80 | -60 | 60 | 80 | 250 | 500 |
|---|---|---|---|---|---|---|---|---|
| 0 | 778 | 500 | 500 | 500 | 500 | 1112 | 1112 | 1556 |
| 6 | 778 | 500 | 500 | 500 | 500 | 1112 | 1112 | 1556 |
| 12 | 778 | 500 | 500 | 500 | 500 | 1112 | 1112 | 1556 |
| 20 | 778 | 500 | 500 | 500 | 500 | 1112 | 1112 | 1556 |

(continued)

| y\x | -200 | -100 | -80 | -60 | 60 | 80 | 250 | 500 |
|---|---|---|---|---|---|---|---|---|
| 30 | 1112 | 1112 | 1112 | 1112 | 1112 | 1112 | 1112 | 2000 |
| 50 | 1112 | 1112 | 1112 | 1112 | 1112 | 1112 | 1112 | 2000 |
| 60 | 1112 | 1112 | 1112 | 1112 | 1112 | 1112 | 1112 | 2000 |
| 80 | 1112 | 1112 | 1112 | 1112 | 1112 | 1112 | 1112 | 2000 |
| x in the table 8 represents the motor output torque, in Nm, y represents the vehicle speed, in km/h, and the output value is the corresponding minimum filtering velocity $V_{min}$, in Nm/s. | | | | | | | | |

3) Determination of interpolation coefficient R

Calculation is conducted by the following steps to obtain the interpolation coefficient R: looking up a corresponding preset third mapping relationship table in the current working condition, the third mapping relationship table storing a mapping relationship of different motor request torques, vehicle speeds and interpolation coefficients R; and determining a corresponding interpolation coefficient R from the third mapping relationship table according to the motor request torque and the vehicle speed. In addition, an interpolation coefficient to be modified is modified by the above step S231 to the step S234 and the step S2331 to the step S2336. After modified, the third mapping relationship table, for example, may be shown in the table 9 below:

Table 9

| y\x | -200 | 0 | 100 | 200 | 400 | 1000 | 1250 | 2000 |
|---|---|---|---|---|---|---|---|---|
| 2 | 0.0082134 | 0.0077265 | 0.0011231 | 0.0011231 | 0.0011231 | 0.0512324 | 0.0965341 | 0.3265411 |
| 6 | 0.0065342 | 0.0077265 | 0.0011231 | 0.0011231 | 0.0011231 | 0.0512324 | 0.0965341 | 0.3265411 |
| 10 | 0.0157430 | 0.0156365 | 0.0011231 | 0.0011231 | 0.0011231 | 0.0512324 | 0.0965341 | 0.2631645 |
| 14 | 0.0253124 | 0.0296401 | 0.0265311 | 0.0266231 | 0.0266231 | 0.0512324 | 0.0965341 | 0.2631645 |
| 30 | 0.0376542 | 0.0360236 | 0.0386723 | 0.0394687 | 0.0498641 | 0.0896432 | 0.0965341 | 0.2631645 |
| 50 | 0.0376542 | 0.0360236 | 0.0386723 | 0.0394687 | 0.0498641 | 0.0896432 | 0.1636541 | 0.3136541 |
| 60 | 0.0436512 | 0.0360236 | 0.0386723 | 0.0394687 | 0.0498641 | 0.1236541 | 0.1864512 | 0.3136541 |
| 80 | 0.0436512 | 0.0360236 | 0.0386723 | 0.0394687 | 0.0498641 | 0.1236541 | 0.1864512 | 0.3136541 |
| x in the table 9 represents the motor request torque, in Nm, y represents the vehicle speed, in km/h, and the output value is the interpolation coefficient R. | | | | | | | | |

4) Determination of the first filtering gradient $M_1$

For example, if the motor output torque is -100 Nm, the vehicle speed is 60/h, and the motor request torque is 100 Nm, by looking up the tables, the corresponding maximum filtering velocity $V_{max}$ is 70000 Nm/s, the minimum filtering $V_{min}$ is 1112 Nm/s, and the interpolation coefficient R is 0.0386723, therefore, $M_1$ is calculated by the formula $M_1=R*V_{max}+(1-R)*V_{min}$, $M_1$ being 3776.0574024 Nm/s. Therefore, in the torque over-zero working condition, the motor request torque is filtered in accordance with the filtering gradient 3776.0574024 Nm/s.

III. Working condition that the current driving mode is a parallel driving mode

The difference between the working condition and the common working condition lies in the different values of the minimum filtering velocity $V_{min}$ (but the valuing method is the same, it is valued by the step S1 to the step S3, and the preset filtering velocity V' is modified by the step S21 to the step S22 and the step S31 to the step S33). Only one example of the second mapping relationship table involved is described below in the determination of the minimum filtering velocity $V_{min}$ in the working condition, and corresponding first filtering gradients $M_1$ are no longer calculated one by one.

The second mapping relationship table, for example, may be shown in the table 10 below:

Table 10

| y\x | -200 | -100 | -80 | -60 | 60 | 80 | 250 | 500 |
|---|---|---|---|---|---|---|---|---|
| 0 | 778 | 510 | 510 | 510 | 510 | 650 | 1100 | 1580 |
| 6 | 778 | 510 | 510 | 510 | 510 | 650 | 1100 | 1580 |
| 12 | 778 | 510 | 510 | 510 | 510 | 650 | 1100 | 1580 |
| 20 | 778 | 510 | 510 | 510 | 510 | 650 | 1100 | 1580 |
| 30 | 1100 | 1000 | 1000 | 1000 | 1000 | 1000 | 1100 | 2000 |
| 50 | 1100 | 1000 | 1000 | 1000 | 1000 | 1000 | 1100 | 2000 |
| 66 | 1100 | 1000 | 1000 | 1000 | 1000 | 1000 | 1100 | 2000 |
| 80 | 1100 | 1000 | 1000 | 1000 | 1000 | 1000 | 1100 | 2000 |

x in the table 10 represents the motor output torque, in Nm, y represents the vehicle speed, in km/h, and the output value is the corresponding minimum filtering velocity $V_{min}$, in Nm/s.

III. Full throttle acceleration working condition

The difference between the working condition and the common working condition lies in different determination methods of the interpolation coefficient R. In the full throttle acceleration working condition, the interpolation coefficient determining method is directly determining that the interpolation coefficient R is equal to the preset fixed value. The preset fixed value, for example, may be 0.9, 0.95 or 1 and the like, preferably 1.

When the preset fixed value is 1, that is, when the interpolation coefficient is 1, the first filtering gradient $M_1$ corresponding to the working condition is the maximum filtering velocity $V_{max}$.

In the solution of embodiments of the present invention, motor torque filtering processing is conducted for the common working conditions and the special working conditions other than the brake energy recovery working condition in the pedaling working condition, and the adopted filtering method can ensure the comfort (smoothness without impact) in the common working conditions and the working condition of the parallel driving mode; on such basis, response can be accelerated as much as possible, and the smoothness of the vehicle can be ensured in the torque over-zero working condition, avoiding impact.

Embodiment II:

The embodiment II differs from the embodiment I of the present invention in that the embodiment II improves motor torque filtering in the brake energy recovery working condition.

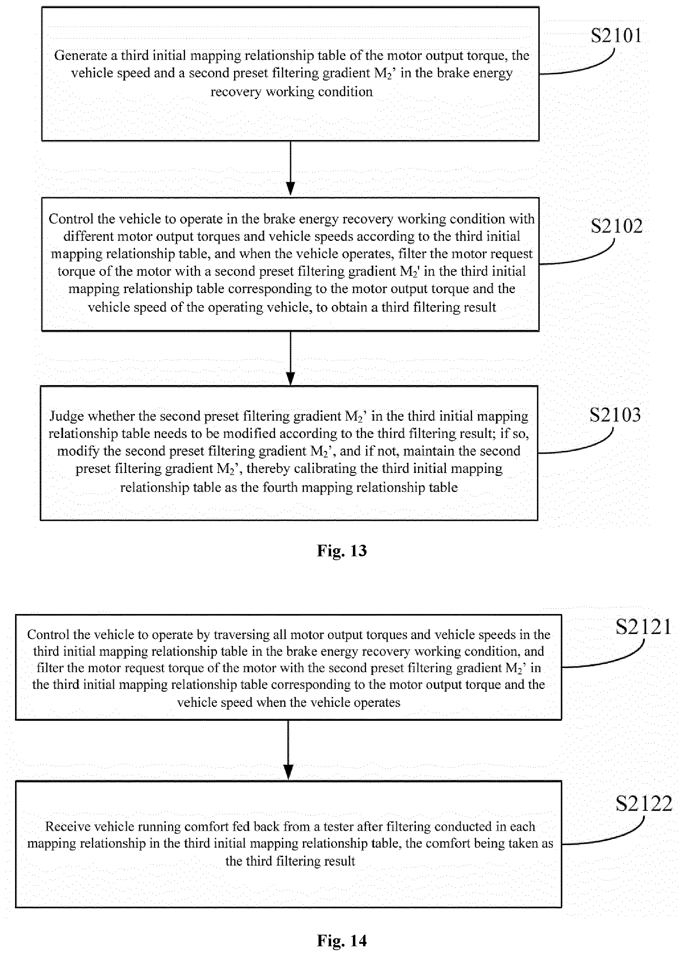

In the embodiment, the vehicle adopts the method of the step S210 to the step S230 in the brake energy recovery working condition. As shown in FIG. 13, the fourth mapping relationship table in the above step S210 is calibrated in the following modes:

step S2101, a third initial mapping relationship table of the motor output torque, the vehicle speed and the second preset filtering gradient $M_2$' in the brake energy recovery working condition is generated;

step S2102, the vehicle is controlled to operate in the brake energy recovery working condition with different motor output torques and vehicle speeds according to the third initial mapping relationship table, and when the vehicle operates, the motor request torque of the motor is filtered with the second preset filtering gradient $M_2$' in the third initial mapping relationship table corresponding to the motor output torque and the vehicle speed of the operating vehicle, to obtain a third filtering result: and

step S2103, whether the second preset filtering gradient $M_2$' in the third initial mapping relationship table needs to be modified is judged according to the third filtering result; if so, the second preset filtering gradient $M_2$' is modified, and if not, the second preset filtering gradient $M_2$' is maintained, thereby calibrating the third initial mapping relationship table as the fourth mapping relationship table.

As shown in FIG. 14, the step S2102 includes:

step S2121, the vehicle is controlled to operate by traversing all motor output torques and vehicle speeds in the third initial mapping relationship table in the brake energy recovery working condition, and the motor request torque of the motor is filtered with the second preset filtering gradient $M_2$' in the third initial mapping relationship table corresponding to the motor output torque and the vehicle speed when the vehicle operates; and

step S2122, vehicle running comfort fed back from a tester after filtering conducted in each mapping relationship in the third initial mapping relationship table is received, the comfort being taken as the third filtering result.

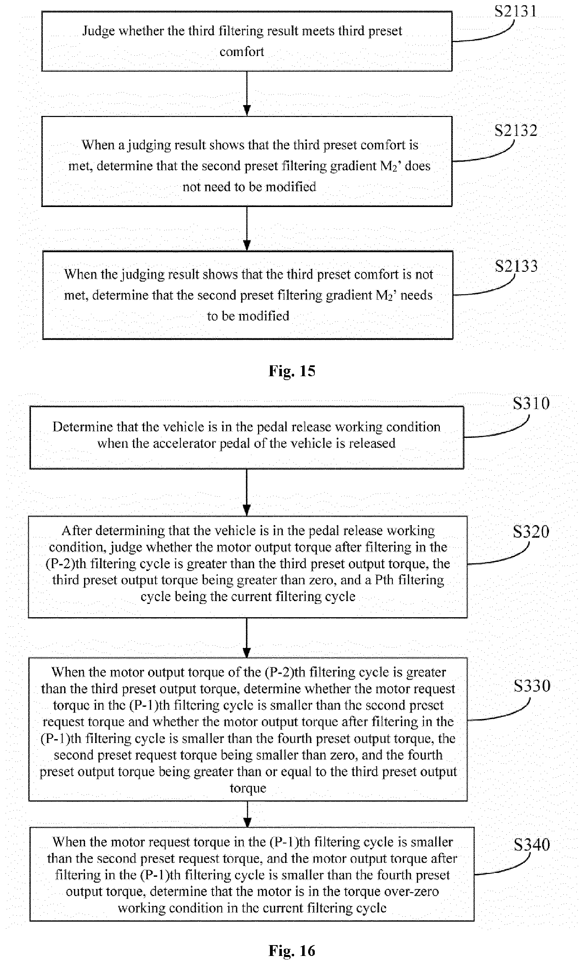

As shown in FIG. 15, in the step S2103, that whether the second preset filtering gradient $M_2$' in the third initial mapping relationship table needs to be modified is judged according to the third filtering result includes:

step S2131, whether the third filtering result meets third preset comfort is judged;

step S2132, when a judging result shows that the third preset comfort is met, it is determined that the second preset filtering gradient $M_2$' does not need to be modified; and

step S2133, when the judging result shows that the third preset comfort is not met, it is determined that the second preset filtering gradient $M_2$' needs to be modified.

In the working condition, continuous adjustment is conducted according to testing results, and calibration is conducted by scanning points, to ensure smooth acceleration at small and medium accelerator opening degrees, rapid response at a large accelerator opening degree, and no over-zero impact. In addition, the gradient shall be gentle in the over-zero area to reduce over-zero impact, and be rapid in the non-over-zero area to mainly ensure the following performance of the regen request. Detailed description is made below with two working conditions of quitting the regen request and quitting the torque over-zero area:

I. Working condition of quitting the regen request

Tests can be conducted in accordance with a working condition B, and the working condition B is:
The gear is shifted to gear D, the vehicle is accelerated, the brake is pressed at different pedal depths to make the vehicle speed at 10 km/h, 20 km/h, 30 km/h, 40 km/h, 50 km/h, 60 km/h, 70 km/h, 80 km/h, 90 km/h, 100 km/h and 110 km/h respectively, and then the brake is released at different rates.

The fourth mapping relationship table, for example, may be shown in the table 11 below:

| y\x | -2000 | -600 | -500 | -150 | 50 | 0 | 400 | 1000 |
|---|---|---|---|---|---|---|---|---|
| 14 | 7200 | 7200 | 1800 | 1800 | 810 | 226 | 810 | 1800 |
| 20 | 7200 | 7200 | 4500 | 4500 | 1800 | 1800 | 4500 | 4500 |
| 30 | 7200 | 7200 | 5400 | 5400 | 4500 | 4500 | 4500 | 4500 |
| 60 | 7200 | 7200 | 5400 | 5400 | 4500 | 4500 | 4500 | 4500 |
| 80 | 7200 | 7200 | 5400 | 5400 | 4500 | 4500 | 4500 | 4500 |
| 100 | 7200 | 7200 | 5400 | 5400 | 4500 | 4500 | 4500 | 4500 |
| 150 | 7200 | 7200 | 5400 | 5400 | 4500 | 4500 | 4500 | 4500 |
| 300 | 7200 | 7200 | 5400 | 5400 | 4500 | 4500 | 4500 | 4500 |
| x in the table 11 represents the motor output torque, in Nm, y represents the vehicle speed, in km/h, and the output value is the second filtering gradient $M_2$. | | | | | | | | |

Therefore, the corresponding second filtering gradient $M_2$ is determined according to the motor output torque and the vehicle speed.

II. Working condition of quitting the over-zero torque

Tests can be conducted in accordance with a working condition C, and the working condition C is:
The gear is shifted to gear D and an economic mode is selected, the vehicle speed is kept at 10 km/h, 20 km/h, 30 km/h, 40 km/h, 50 km/h, 60 km/h, 70 km/h and 80 km/h respectively, and the accelerator pedal is intermittently pressed to the small, medium and large accelerator opening degrees (small accelerator pedal opening degree: 10%-40%, medium accelerator pedal opening degree 40%-70%, and large accelerator pedal opening degree 70%-100%) respectively during a steady speed period, to accelerate for 5 s.

The fourth mapping relationship table, for example, may be shown in the table 12 below:

| y\x | -2000 | -600 | -500 | -150 | 50 | 0 | 400 | 1000 |
|---|---|---|---|---|---|---|---|---|
| 14 | 7200 | 7200 | 1800 | 1440 | 648 | 226 | 810 | 1800 |
| 20 | 7200 | 7200 | 4500 | 3600 | 1440 | 1800 | 4500 | 4500 |
| 30 | 7200 | 7200 | 5400 | 3600 | 3600 | 4500 | 4500 | 4500 |
| 60 | 7200 | 7200 | 5400 | 3600 | 3600 | 4500 | 4500 | 4500 |
| 80 | 7200 | 7200 | 5400 | 3600 | 3600 | 4500 | 4500 | 4500 |
| 100 | 7200 | 7200 | 5400 | 3600 | 3600 | 4500 | 4500 | 4500 |
| 150 | 7200 | 7200 | 5400 | 3600 | 3600 | 4500 | 4500 | 4500 |
| 300 | 7200 | 7200 | 5400 | 3600 | 3600 | 4500 | 4500 | 4500 |
| x in the table 12 represents the motor output torque, in Nm, y represents the vehicle speed, in km/h, and the output value is the second filtering gradient $M_2$. | | | | | | | | |

Therefore, the corresponding second filtering gradient $M_2$ is determined according to the motor output torque and the vehicle speed.

According to the solution of the embodiment of the present invention, the motor torque filtering is improved in the brake energy recovery working condition, thereby ensuring that the motor torque responds to the regen request as fast as possible on the basis of smoothness without impact, and reducing fuel consumption. In addition, two different working conditions are separately defined in this working condition, and main purposes in different working conditions are further refined, to ensure smooth acceleration at small and medium accelerator opening degrees, rapid response at a large accelerator opening degree, and no over-zero impact. In addition, the gradient shall be gentle in the over-zero area to reduce over-zero impact, and be rapid in the non-over-zero area to mainly ensure the following performance of the regen request.

Embodiment III:

The embodiment III differs from the embodiment I or the embodiment II of the present invention in that the embodiment III improves motor torque filtering in various common working conditions and special working conditions corresponding to the pedal release working condition. In the embodiment III, the motor filtering method for various common working conditions and special working conditions corresponding to the pedal release working condition is kept accordant with the motor filtering method for various common working conditions and special working conditions corresponding to the pedaling working condition, but the values of various parameters $V_{max}$, $V_{min}$ and R involved therein are different.

Since the motor filtering method in various working conditions in the pedal release working condition is accordant with the motor filtering method in various working conditions in the pedaling working condition (except for the torque over-zero working condition), related methods are no longer described below, but only the determination of values of various parameters $V_{max}$, $V_{min}$ and R involved in various working conditions is described.

I. Common working conditions

1) Determination of the maximum filtering velocity $V_{max}$

The first mapping relationship table, for example, is shown in table 13 below:

Table 13

| y\x | -5000 | -1000 | 0 | 1000 | 2000 | 4000 | 6000 | 10000 |
|---|---|---|---|---|---|---|---|---|
| 0 | 10000 | 10000 | 10000 | 10000 | 10000 | 10000 | 10000 | 10000 |
| 20 | 10000 | 10000 | 10000 | 10000 | 10000 | 10000 | 10000 | 10000 |
| 40 | 10000 | 10000 | 10000 | 10000 | 10000 | 10000 | 10000 | 10000 |
| 60 | 10000 | 10000 | 10000 | 10000 | 10000 | 10000 | 10000 | 10000 |

(continued)

| y\x | -5000 | -1000 | 0 | 1000 | 2000 | 4000 | 6000 | 10000 |
|---|---|---|---|---|---|---|---|---|
| 80 | 10000 | 10000 | 10000 | 10000 | 10000 | 10000 | 10000 | 10000 |
| 100 | 10000 | 10000 | 10000 | 10000 | 10000 | 10000 | 10000 | 10000 |
| 150 | 10000 | 10000 | 10000 | 10000 | 10000 | 10000 | 10000 | 10000 |
| 300 | 10000 | 10000 | 10000 | 10000 | 10000 | 10000 | 10000 | 10000 |
| x in the table 13 represents the motor output torque, in Nm, y represents the vehicle speed, in km/h, and the output value is the maximum filtering velocity $V_{max}$, in Nm/s. | | | | | | | | |

2) Determination of the minimum filtering velocity $V_{min}$

The second mapping relationship table, for example, is shown in table 14 below:

Table 14

| y\x | -1500 | -1000 | -225 | -100 | 10 | 75 | 100 | 1500 |
|---|---|---|---|---|---|---|---|---|
| 8 | 1444 | 724 | 448 | 92 | 92 | 648 | 1216 | 3888 |
| 16 | 1444 | 724 | 448 | 164 | 164 | 648 | 1216 | 3888 |
| 26 | 1928 | 1012 | 448 | 324 | 244 | 648 | 1216 | 3888 |
| 50 | 2432 | 1228 | 692 | 568 | 408 | 648 | 1216 | 3888 |
| 80 | 2896 | 2412 | 1032 | 568 | 408 | 648 | 1216 | 3888 |
| 100 | 2896 | 2412 | 1032 | 568 | 408 | 648 | 1216 | 3888 |
| 120 | 2896 | 2412 | 1032 | 568 | 408 | 648 | 1216 | 3888 |
| 140 | 2896 | 2412 | 1032 | 568 | 408 | 648 | 1216 | 3888 |
| x in the table 14 represents the motor output torque, in Nm, y represents the vehicle speed, in km/h, and the output value is the minimum filtering velocity $V_{min}$, in Nm/s. | | | | | | | | |

Calibration of the minimum filtering velocity $V_{min}$ shall ensure that no impact is caused at different vehicle speeds when the interpolation coefficient is 0. The key attention shall be paid to appropriately slow calibration in the motor torque over-zero area, to improve a lash torque gradient.

3) Determination of the interpolation coefficient R

Tests are conducted in accordance with the following working condition D, continuous adjustment is conducted according to testing results, and calibration is conducted by scanning points, to ensure smooth acceleration at small and medium accelerator opening degrees, rapid response at a large accelerator opening degree, and no over-zero impact.

Working condition D: the gear is shifted to gear D and a Hybrid mode (fuel-electric hybrid driving mode) is selected, the vehicle speed is kept at 10 km/h, 20 km/h, 30 km/h, 40 km/h, 50 km/h, 60 km/h, 70 km/h, 80 km/h, 90 km/h and 100 km/h respectively, and the accelerator pedal is intermittently pressed to the small, medium and large accelerator opening degrees (small accelerator pedal opening degree: 10%-40%, medium accelerator pedal opening degree 40%-70%, and large accelerator pedal opening degree 70%-100%) respectively during the steady speed period, and then the accelerator pedal is released.

Table 15

| y\x | -1600 | -100 | -50 | 0 | 400 | 800 | 1200 | 1800 |
|---|---|---|---|---|---|---|---|---|
| 0 | 0.2812500 | 0.0000000 | 0.0000000 | 0.0000000 | 0.0000000 | 0.0000000 | 0.0000000 | 0.4765625 |
| 20 | 0.3359375 | 0.0000000 | 0.0000000 | 0.0000000 | 0.0000000 | 0.0000000 | 0.0000000 | 0.4765625 |
| 40 | 0.3750000 | 0.0000000 | 0.0000000 | 0.0000000 | 0.0000000 | 0.0000000 | 0.0000000 | 0.4765625 |

(continued)

| y\x | -1600 | -100 | -50 | 0 | 400 | 800 | 1200 | 1800 |
|-----|-------|------|-----|---|-----|-----|------|------|
| 50 | 0.4062500 | 0.0000000 | 0.0000000 | 0.0000000 | 0.0000000 | 0.0000000 | 0.0000000 | 0.4765625 |
| 80 | 0.4765625 | 0.0000000 | 0.0000000 | 0.0000000 | 0.0000000 | 0.0000000 | 0.0000000 | 0.4765625 |
| 100 | 0.4765625 | 0.0000000 | 0.0000000 | 0.0000000 | 0.0000000 | 0.0000000 | 0.0000000 | 0.4765625 |
| 150 | 0.4765625 | 0.0000000 | 0.0000000 | 0.0000000 | 0.0000000 | 0.0000000 | 0.0000000 | 0.4765625 |
| 300 | 0.4765625 | 0.0000000 | 0.0000000 | 0.0000000 | 0.0000000 | 0.0000000 | 0.0000000 | 0.4765625 |
| x in the table 15 represents the motor request torque, in Nm, y represents the vehicle speed, in km/h, and the output value is the interpolation coefficient R. | | | | | | | | |

4) Determination of the first filtering gradient $M_1$

For example, if the motor output torque is -1000 Nm, the vehicle speed is 80 km/h, and the motor request torque is 400 Nm, by looking up the tables, the corresponding maximum filtering velocity $V_{max}$ is 10000 Nm/s, the minimum filtering velocity $V_{min}$ is 2412 Nm/s, and the interpolation coefficient R is 0.0000000, therefore, calculation is conducted by the formula $M_1=R*V_{max}+(1-R)*V_{min}$ to obtain $M_1$, and $M_1$ is 2412 Nm/s. Therefore, in the common working conditions, the motor request torque is filtered in accordance with the filtering gradient 2412 Nm/s.

II. Torque over-zero working condition

The difference between the torque over-zero working condition and the common working conditions lies in the different values of the maximum filtering velocity $V_{max}$ and the minimum filtering velocity $V_{min}$. In the motor torque filtering process, over-zero recognition shall be conducted in each filtering cycle. The recognition method, i.e. a method of determining whether the motor is in the torque over-zero working condition in the current filtering cycle, as shown in FIG. 16, includes:

step S310, it is determined that the vehicle is in the pedal release working condition when the accelerator pedal of the vehicle is released;
step S320, after determining that the vehicle is in the pedal release working condition, whether the motor output torque after filtering in the (P-2)th filtering cycle is greater than the third preset output torque is judged, the third preset output torque being greater than zero, and a Pth filtering cycle being the current filtering cycle;
step S330, when the motor output torque of the (P-2)th filtering cycle is greater than the third preset output torque, whether the motor request torque in the (P-1)th filtering cycle is smaller than the second preset request torque and whether the motor output torque after filtering in the (P-1)th filtering cycle is smaller than the fourth preset output torque are determined, the second preset request torque being smaller than zero, and the fourth preset output torque being greater than or equal to the third preset output torque; and
step S340, when the motor request torque in the (P-1)th filtering cycle is smaller than the second preset request torque, and the motor output torque after filtering in the (P-1)th filtering cycle is smaller than the fourth preset output torque, it is determined that the motor is in the torque over-zero working condition in the current filtering cycle.

In the step S320, the third preset output torque, for example, may be 25 Nm. In the step S330, the second preset request torque, for example, may be -10 Nm, and the fourth preset output torque, for example, may be 25 Nm.
Only one example of the mapping relationship tables involved in the determination of the maximum filtering velocity $V_{max}$ and the minimum filtering velocity $V_{min}$ in the working condition is described below, and corresponding first filtering gradients $M_1$ are no longer calculated one by one.

1) Determination of the maximum filtering velocity $V_{max}$

When judging that the motor is currently in the torque over-zero working condition, the first mapping relationship table, for example, may be shown in table 16 below:

Table 16

| y\x | -400 | -220 | -150 | 0 | 150 | 300 | 500 | 800 |
|---|---|---|---|---|---|---|---|---|
| 10 | 5000 | 3000 | 1000 | 1000 | 1000 | 2000 | 3500 | 9000 |
| 20 | 5000 | 3000 | 1000 | 1000 | 1000 | 2000 | 3500 | 9000 |
| 30 | 5000 | 3000 | 1000 | 1000 | 1000 | 2500 | 4000 | 9000 |
| 40 | 5000 | 3000 | 1000 | 1000 | 1000 | 3000 | 7000 | 9000 |
| 50 | 5000 | 3000 | 1000 | 1000 | 1000 | 4500 | 7000 | 9000 |
| 60 | 5000 | 3000 | 1000 | 1000 | 1000 | 4500 | 7000 | 9000 |
| 80 | 5000 | 3000 | 1000 | 1000 | 1000 | 4500 | 7000 | 9000 |
| 100 | 5000 | 3000 | 1000 | 1000 | 1000 | 4500 | 7000 | 9000 |
| x in the table 16 represents the motor output torque, in Nm, y represents the vehicle speed, in km/h, and the output value is the maximum filtering velocity $V_{max}$, in Nm/s. | | | | | | | | |

2) Determination of the minimum filtering velocity $V_{min}$

When judging that the motor is currently in the torque over-zero working condition, the second mapping relationship table, for example, may be shown in table 17 below:

Table 17

| y\x | -400 | -220 | -150 | 0 | 150 | 300 | 500 | 800 |
|---|---|---|---|---|---|---|---|---|
| 10 | 1000 | 112 | 56 | 56 | 56 | 500 | 1000 | 2000 |
| 20 | 1000 | 112 | 56 | 56 | 56 | 500 | 1000 | 2000 |
| 30 | 1000 | 112 | 56 | 56 | 56 | 500 | 1000 | 2500 |
| 40 | 1000 | 200 | 56 | 56 | 56 | 1000 | 3000 | 3000 |
| 50 | 1000 | 200 | 56 | 56 | 56 | 1000 | 4000 | 4000 |
| 60 | 1000 | 200 | 56 | 56 | 56 | 1000 | 4000 | 4000 |
| 80 | 1000 | 200 | 56 | 56 | 56 | 1000 | 4000 | 4000 |
| 100 | 1000 | 200 | 56 | 56 | 56 | 1000 | 4000 | 4000 |
| x in the table 17 represents the motor output torque, in Nm, y represents the vehicle speed, in km/h, and the output value is the minimum filtering velocity $V_{min}$, in Nm/s. | | | | | | | | |

III. Working condition that the current driving mode is the parallel driving mode

The difference between this working condition and the common working conditions lies in the different values of the maximum filtering velocity $V_{max}$ and the minimum filtering velocity $V_{min}$ (but the valuing methods thereof are the same). Only one example of the mapping relationship tables involved in the determination of the maximum filtering velocity $V_{max}$ and the minimum filtering velocity $V_{min}$ in the working condition is described below, and corresponding first filtering gradients $M_1$ are no longer calculated one by one.

1) Determination of the maximum filtering velocity $V_{max}$

The first mapping relationship table, for example, may be shown in table 18 below:

Table 18

| y\x | -5000 | -1000 | 0 | 1000 | 2000 | 4000 | 6000 | 10000 |
|---|---|---|---|---|---|---|---|---|
| 0 | 9500 | 9500 | 9500 | 9500 | 9500 | 9500 | 9500 | 9500 |

(continued)

| y\x | -5000 | -1000 | 0 | 1000 | 2000 | 4000 | 6000 | 10000 |
|---|---|---|---|---|---|---|---|---|
| 20 | 9500 | 9500 | 9500 | 9500 | 9500 | 9500 | 9500 | 9500 |
| 40 | 9500 | 9500 | 9500 | 9500 | 9500 | 9500 | 9500 | 9500 |
| 60 | 9500 | 9500 | 9500 | 9500 | 9500 | 9500 | 9500 | 9500 |
| 80 | 9500 | 9500 | 9500 | 9500 | 9500 | 9500 | 9500 | 9500 |
| 100 | 9500 | 9500 | 9500 | 9500 | 9500 | 9500 | 9500 | 9500 |
| 150 | 9500 | 9500 | 9500 | 9500 | 9500 | 9500 | 9500 | 9500 |
| 300 | 9500 | 9500 | 9500 | 9500 | 9500 | 9500 | 9500 | 9500 |

x in the table 18 represents the motor output torque, in Nm, y represents the vehicle speed, in km/h, and the output value is the maximum filtering velocity $V_{max}$, in Nm/s.

2) Determination of the minimum filtering velocity $V_{min}$

The second mapping relationship table, for example, may be shown in table 19 below:

Table 19

| y\x | -1500 | -1000 | -225 | -100 | 10 | 75 | 100 | 1500 |
|---|---|---|---|---|---|---|---|---|
| 8 | 1444 | 724 | 448 | 92 | 92 | 648 | 1216 | 3888 |
| 16 | 1444 | 724 | 448 | 164 | 164 | 648 | 1216 | 3888 |
| 26 | 1928 | 1012 | 448 | 324 | 244 | 648 | 1216 | 3888 |
| 50 | 2432 | 1228 | 692 | 568 | 408 | 648 | 1216 | 3888 |
| 80 | 2896 | 2412 | 1032 | 568 | 408 | 648 | 1216 | 3888 |
| 100 | 2896 | 2412 | 1032 | 568 | 408 | 648 | 1216 | 3888 |
| 120 | 2896 | 2412 | 1032 | 568 | 408 | 648 | 1216 | 3888 |
| 140 | 2896 | 2412 | 1032 | 568 | 408 | 648 | 1216 | 3888 |

x in the table 19 represents the motor output torque, in Nm, y represents the vehicle speed, in km/h, and the output value is the minimum filtering velocity $V_{min}$, in Nm/s.

IV. The driving mode is an economic driving mode (ECO mode)

In the ECO mode, the motor torque is reduced more rapidly and filtered more when the accelerator pedal is released, thereby recovering more energy, and being more beneficial to fuel consumption. The difference between this working condition and the common working conditions lies in different values of the minimum filtering velocity $V_{min}$, for example, as shown in table 20 below:

Table 20

| y\x | -1500 | -1000 | -800 | -600 | -400 | -225 | -100 | 10 | 75 | 100 | 800 | 1500 |
|---|---|---|---|---|---|---|---|---|---|---|---|---|
| 12 | 7224 | 3220 | 2832 | 2448 | 2068 | 1728 | 100 | 100 | 92 | 1800 | 3600 | 5400 |
| 16 | 7224 | 3220 | 2832 | 2448 | 2068 | 1728 | 100 | 100 | 92 | 1800 | 3600 | 5400 |
| 40 | 9640 | 4816 | 4020 | 3224 | 2428 | 1728 | 632 | 452 | 92 | 1800 | 3600 | 5400 |
| 50 | 9640 | 4816 | 4020 | 3224 | 2428 | 1728 | 632 | 452 | 92 | 1800 | 3600 | 5400 |
| 80 | 9640 | 4816 | 4020 | 3224 | 2428 | 1728 | 632 | 452 | 92 | 1800 | 3600 | 5400 |
| 100 | 9640 | 4816 | 4020 | 3224 | 2428 | 1728 | 632 | 452 | 92 | 1800 | 3600 | 5400 |

(continued)

| y\x | -1500 | -1000 | -800 | -600 | -400 | -225 | -100 | 10 | 75 | 100 | 800 | 1500 |
|---|---|---|---|---|---|---|---|---|---|---|---|---|
| 120 | 9640 | 4816 | 4020 | 3224 | 2428 | 1728 | 632 | 452 | 92 | 1800 | 3600 | 5400 |
| 140 | 9640 | 4816 | 4020 | 3224 | 2428 | 1728 | 632 | 452 | 92 | 1800 | 3600 | 5400 |
| x in the table 20 represents the motor output torque, in Nm, y represents the vehicle speed, in km/h, and the output value is the minimum filtering velocity $V_{min}$, in Nm/s. | | | | | | | | | | | | |

In the solution of this embodiment of the present invention, motor torque filtering processing is conducted for the common working conditions and the special working conditions other than the brake energy recovery working condition in the pedal release working condition, and the adopted filtering method can ensure the comfort (smoothness without impact) in the common working conditions and the working condition of the parallel driving mode; on such basis, response can be accelerated as much as possible, and the smoothness of the vehicle can be ensured in the torque over-zero working condition, avoiding impact.

Example IV:

The embodiment IV differs from the embodiment III of the present invention in that the embodiment IV improves motor torque filtering in the brake energy recovery working condition in the pedal release working condition.

In the embodiment IV, a determination method for the torque filtering gradient in the brake energy recovery working condition in the pedal release working condition is the same as that in the embodiment II, but the values thereof are different. Therefore, only the third mapping relationship table involved in the method is described as example.

When a brake torque absolute value is greater than 50 Nm and the lasting time thereof exceeds 0.1s, it is determined that it is in a brake working condition. Aiming at a timeliness requirement on a brake request response in brake energy recovery, a braking non-over-zero working condition and a braking over-zero working condition are respectively calibrated, and different requirements are designed. Aiming at the braking non-over-zero working condition, brake is adjusted according to different brake intensities and vehicle speeds, to balance regen response and impact. The motor torque shall respond to the regen request as rapidly as possible without impact in kinetic energy recovery. Aiming at the braking over-zero working condition, when detecting that the motor torque is to cross the zero point, attention shall be paid to that the motor torque shall be slowed down as much as possible when crossing the zero point, to avoid impact. Detailed description is made below with two working conditions of a lash activation working condition and a lash quitting working condition in the brake working condition:

I. Lash activation working condition

The fourth mapping relationship table, for example, may be shown in table 21 below:

Table 21

| y\x | -5000 | -1000 | -500 | 0 | 500 | 4000 | 6000 | 10000 |
|---|---|---|---|---|---|---|---|---|
| 0 | 7200 | 7200 | 1800 | 1800 | 1800 | 1800 | 1800 | 1800 |
| 20 | 7200 | 7200 | 1800 | 1800 | 1800 | 1800 | 1800 | 1800 |
| 40 | 7200 | 7200 | 1800 | 1800 | 1800 | 1800 | 1800 | 1800 |
| 60 | 7200 | 7200 | 1800 | 1800 | 1800 | 1800 | 1800 | 1800 |
| 80 | 7200 | 7200 | 1800 | 1800 | 1800 | 1800 | 1800 | 1800 |
| 100 | 7200 | 7200 | 1800 | 1800 | 1800 | 1800 | 1800 | 1800 |
| 150 | 7200 | 7200 | 1800 | 1800 | 1800 | 1800 | 1800 | 1800 |
| 300 | 7200 | 7200 | 1800 | 1800 | 1800 | 1800 | 1800 | 1800 |
| x in the table 21 represents the motor output torque, in Nm, y represents the vehicle speed, in km/h, and the output value is the second filtering gradient $M_2$. | | | | | | | | |

II. The lash quitting working condition

Tests can be conducted in accordance with a working condition E, and the working condition E is:
the economic driving mode (ECO mode) is selected, the gear is shifted to gear D, the vehicle is accelerated, the brake is pressed at different pedal depths to make the vehicle speed at 10 km/h, 20 km/h, 30 km/h, 40km/h, 50 km/h, 60 km/h, 70 km/h, 80 km/h, 90 km/h and 100 km/h respectively, and then the brake is released at different velocities.
The fourth mapping relationship table, for example, may be shown in table 22 below:

Table 22

| y\x | -5000 | -1000 | -500 | 0 | 500 | 4000 | 6000 | 10000 |
|---|---|---|---|---|---|---|---|---|
| 0 | 7200 | 7200 | 4500 | 4500 | 1800 | 1800 | 1800 | 1800 |
| 20 | 7200 | 7200 | 4500 | 4500 | 1800 | 1800 | 1800 | 1800 |
| 40 | 7200 | 7200 | 4500 | 4500 | 1800 | 1800 | 1800 | 1800 |
| 60 | 7200 | 7200 | 4500 | 4500 | 1800 | 1800 | 1800 | 1800 |
| 80 | 7200 | 7200 | 4500 | 4500 | 1800 | 1800 | 1800 | 1800 |
| 100 | 7200 | 7200 | 4500 | 4500 | 1800 | 1800 | 1800 | 1800 |
| 150 | 7200 | 7200 | 4500 | 4500 | 1800 | 1800 | 1800 | 1800 |
| 300 | 7200 | 7200 | 4500 | 4500 | 1800 | 1800 | 1800 | 1800 |
| x in the table 22 represents the motor output torque, in Nm, y represents the vehicle speed, in km/h, and the output value is the second filtering gradient $M_2$. | | | | | | | | |

Therefore, the corresponding second filtering gradient $M_2$ is determined according to the motor output torque and the vehicle speed.
According to the solution of the embodiment of the present invention, the motor torque filtering is improved in the brake energy recovery working condition, thereby ensuring that the motor torque responds to the regen request as rapid as possible on the basis of smoothness without impact, and reducing fuel consumption. In addition, two different working conditions are separately defined in this working condition, and main purposes in different working conditions are further refined, to ensure smooth acceleration at small and medium accelerator opening degrees, rapid response at a large accelerator opening degree, and no over-zero impact. In addition, the gradient shall be gentle in the over-zero area to reduce over-zero impact, and be rapid in the non-over-zero area to mainly ensure the following performance of the regen request.

**Claims**

1.  A motor torque filtering control method, for filtering a motor request torque of a hybrid electric vehicle, wherein the motor torque filtering control method comprises the following steps:

    determining a current working condition of a vehicle, the current working condition including a brake energy recovery working condition (S100);
    selecting a filtering strategy corresponding to the current working condition from multiple preset filtering strategies according to the current working condition of the vehicle, to filter the motor request torque of the motor (S200); wherein
    when the current working condition of the vehicle is not the brake energy recovery working condition, the selected filtering strategy is a first filtering strategy, and the first filtering strategy comprises the following steps:

    acquiring a driving mode and a vehicle speed of the vehicle in a current filtering cycle and a motor request torque distributed before filtering in the current filtering cycle, and acquiring a motor output torque after filtering in a previous filtering cycle (S201);
    determining a target maximum filtering velocity $V_{max}$ in Newtons times meter per second, and a target minimum filtering velocity $V_{min}$ in Newtons times meter per second,
    according to the driving mode, the motor output torque and the vehicle speed (S202); **characterized in that** the first filtering strategy also comprises:

determining an interpolation coefficient R, 0≤R≤1 (S203);

calculating a first filtering gradient $M_1$ by a formula $M_1=R*V_{max}+(1-R)*V_{min}$ (S204); and

filtering the motor request torque of the motor in accordance with the first filtering gradient $M_1$ (S205).

2. The motor torque filtering control method according to claim 1, wherein determining the target maximum filtering velocity $V_{max}$ and the target minimum filtering velocity $V_{min}$ according to the driving mode, the motor output torque and the vehicle speed comprises the following steps:

looking up a corresponding preset first mapping relationship table and a second mapping relationship table in the current working condition and the driving mode, the first mapping relationship table storing a mapping relationship of the motor output torque, the vehicle speed and the maximum filtering velocity, and the second mapping relationship table storing a mapping relationship of the motor output torque, the vehicle speed and the minimum filtering velocity (S2021); and

determining the corresponding target maximum filtering velocity $V_{max}$ and the target minimum filtering velocity $V_{min}$ from the first mapping relationship table and the second mapping relationship table respectively according to the motor output torque and the vehicle speed of the vehicle (S2022).

3. The motor torque filtering control method according to claim 2, wherein each of the first mapping relationship table and the second mapping relationship table in each working condition is calibrated in the following modes:

generating a first initial mapping relationship table of the motor output torque, the vehicle speed and a preset filtering velocity V' in the working condition, the preset filtering velocity V' being a preset maximum filtering velocity or minimum filtering velocity to be modified (S1);

controlling the vehicle to operate in the working condition and different motor output torques and vehicle speeds according to the first initial mapping relationship table, and when the vehicle operates, filtering the motor request torque of the motor by taking the preset filtering velocity V' in the first initial mapping relationship table corresponding to the motor output torque and the vehicle speed of the operating vehicle as a filtering gradient, to obtain a first filtering result (S2); and

judging whether the preset filtering velocity V' in the first initial mapping relationship table needs to be modified according to the first filtering result; if so, modifying the preset filtering velocity V', and if not, maintaining the preset filtering velocity V', thereby calibrating the first initial mapping relationship table as the first mapping relationship table or the second mapping relationship table (S3).

4. The motor torque filtering control method according to claim 3, wherein controlling the vehicle to operate in the working condition and different motor output torques and vehicle speeds according to the first initial mapping relationship table, and when the vehicle operates, filtering the motor request torque of the motor by taking the preset filtering velocity V' in the first initial mapping relationship table corresponding to the motor output torque and the vehicle speed of the operating vehicle as the filtering gradient, to obtain the first filtering result, comprises:

controlling the vehicle to operate by traversing all motor output torques and vehicle speeds in the first initial mapping relationship table in the working condition, and filtering the motor request torque of the motor by taking the preset filtering velocity V' in the first initial mapping relationship table corresponding to the motor output torque and the vehicle speed when the vehicle operates as the filtering gradient (S21); and

receiving vehicle running comfort fed back from a tester after filtering conducted in each mapping relationship in the first initial mapping relationship table, and taking the comfort as the first filtering result (S22); and

judging whether the preset filtering velocity V' in the first initial mapping relationship table needs to be modified according to the first filtering result, comprises:

judging whether the first filtering result meets first preset comfort (S31);

when judging that the first preset comfort is met, determining that the preset filtering velocity V' does not need to be modified (S32); and

when judging that the first preset comfort is not met, determining that the preset filtering velocity V' needs to be modified (S33).

5. The motor torque filtering control method according to any one of claims 2-4, wherein the driving mode comprises a pure electric driving mode, a serial driving mode or a parallel driving mode;

wherein the current working condition of the vehicle also comprises at least one of the following: a pedaling working condition, a pedal release working condition, a torque over-zero working condition, and a full throttle acceleration working condition; and

the first mapping relationship table corresponding to the current working condition being the torque over-zero working condition is different from the first mapping relationship table corresponding to the current working condition being any working condition other than the torque over-zero working condition, and the second mapping relationship table corresponding to the current working condition being the torque over-zero working condition is different from the second mapping relationship table corresponding to the current working condition being any working condition other than the torque over-zero working condition.

6. The motor torque filtering control method according to claim 5, wherein a method for determining that the current working condition of the vehicle is the pedaling working condition and the torque over-zero working condition comprises the following steps:

determining that the vehicle is in the pedaling working condition when an accelerator pedal of the vehicle is pressed (S101);

after determining that the vehicle is in the pedaling working condition, judging whether the motor output torque after filtering in a (P-2)th filtering cycle is smaller than a first preset output torque, the first preset output torque being smaller than zero, and a Pth filtering cycle is the current filtering cycle (S102);

when the motor output torque in the (P-2)th filtering cycle is smaller than the first preset output torque, judging whether the motor request torque in a (P-1)th filtering cycle is greater than a first preset request torque and whether the motor output torque after filtering in the (P-1)th filtering cycle is greater than a second preset output torque, the first preset request torque being greater than zero, and the second preset output torque being smaller than or equal to the first preset output torque (S 103); and

when the motor request torque in the (P-1)th filtering cycle is greater than the first preset request torque, and the motor output torque after filtering in the (P-1)th filtering cycle is greater than the second preset output torque, determining that the motor is in the torque over-zero working condition in the current filtering cycle (S104).

7. The motor torque filtering control method according to claim 5, wherein a method for determining that the current working condition of the vehicle is the pedal release working condition and the torque over-zero working condition comprises the following steps:

determining that the vehicle is in the pedal release working condition when the accelerator pedal of the vehicle is released (S310);

after determining that the vehicle is in the pedal release working condition, judging whether the motor output torque after filtering in the (P-2)th filtering cycle is greater than a third preset output torque, the third preset output torque being greater than zero, and a Pth filtering cycle being the current filtering cycle (S320);

when the motor output torque of the (P-2)th filtering cycle is greater than the third preset output torque, judging whether the motor request torque in the (P-1)th filtering cycle is smaller than a second preset request torque and whether the motor output torque after filtering in the (P-1)th filtering cycle is smaller than a fourth preset output torque, the second preset request torque being smaller than zero, and the fourth preset output torque being greater than or equal to the third preset output torque (S330); and

when the motor request torque in the (P-1)th filtering cycle is smaller than the second preset request torque, and the motor output torque after filtering in the (P-1)th filtering cycle is smaller than the fourth preset output torque, determining that the motor is in the torque over-zero working condition in the current filtering cycle (S340).

8. The motor torque filtering control method according to claim 5, wherein determining the interpolation coefficient R, comprises the following steps:

selecting an interpolation coefficient determining method corresponding to the current working condition from multiple interpolation coefficient determining methods according to the current working condition of the vehicle (S2031); and

determining the interpolation coefficient R according to the selected interpolation coefficient determining method (S2032), wherein when the current working condition of the vehicle is the full throttle acceleration working condition, the selected interpolation coefficient determining method is directly determining that the interpolation coefficient R is equal to a preset fixed value, wherein when the current working condition of the vehicle is not the full throttle acceleration working condition, the selected interpolation coefficient determining method comprises the following steps:

looking up a corresponding preset third mapping relationship table in the current working condition, the third mapping relationship table stores mapping relationships of different motor request torques, vehicle speeds and interpolation coefficients R; and

determining the corresponding interpolation coefficient R from the third mapping relationship table according to the motor request torque and the vehicle speed in the current working condition.

9. The motor torque filtering control method according to claim 8, wherein the third mapping relationship table in each working condition is calibrated in the following modes:

generating a second initial mapping relationship table of the motor request torque, the vehicle speed and a preset coefficient R' in the working condition (S231);

controlling the vehicle to operate in the working condition and different motor request torques and vehicle speeds according to the second initial mapping relationship table, and calculating a first initial filtering gradient $M_1'$ by the formula $M_1'=R'*V_{max}+(1-R')*V_{min}$ according to the determined maximum filtering velocity $V_{max}$ and the minimum filtering velocity $V_{min}$ corresponding to different motor output torques and vehicle speeds and the preset coefficient R' corresponding to the different motor request torques and the vehicle speeds determined from the second initial mapping relationship table (S232);

filtering the motor request torque of the motor in accordance with the first initial filtering gradient $M_1'$ when the vehicle operates, to obtain a second filtering result (S233); and

judging whether the preset coefficient R' in the second initial mapping relationship table needs to be modified according to the second filtering result; if so, modifying the preset coefficient R', and if not, maintaining the preset coefficient R', thereby calibrating the second initial mapping relationship table as the third mapping relationship table (S234).

10. The motor torque filtering control method according to claim 9, wherein filtering the motor request torque of the motor in accordance with the first filtering gradient $M_1'$ when the vehicle operates, to obtain the second filtering result, comprises:

filtering the motor request torque of the motor with the first initial filtering gradient $M_1'$ when the vehicle operates by traversing all motor request torques and vehicle speeds in the second initial mapping relationship table (S2331); and

receiving vehicle running comfort fed back from a tester after filtering conducted in each mapping relationship in the second initial mapping relationship table, and taking the comfort as the second filtering result (S2332); and

judging whether the preset coefficient R' in the second initial mapping relationship table needs to be modified according to the second filtering result, comprises:

judging whether the second filtering result meets second preset comfort;

when judging that the second preset comfort is met, determining that the preset coefficient R' does not need to be modified; and

when judging that the second preset comfort is not met, determining that the preset coefficient R' needs to be modified.

11. The motor torque filtering control method according to claim 1, wherein when the current working condition of the vehicle is the brake energy recovery working condition, the selected filtering strategy is a second filtering strategy, and the second filtering strategy comprises the following steps:

looking up a preset fourth mapping relationship table corresponding to the brake energy recovery working condition, the fourth mapping relationship table storing a mapping relationship of a motor output torque, a vehicle speed and a second filtering gradient $M_2$ (S210);

determining the corresponding second filtering gradient $M_2$ from the fourth mapping relationship table according to the motor output torque and the vehicle speed (S220); and

filtering the motor request torque of the motor in accordance with the second filtering gradient $M_2$ (S230).

12. The motor torque filtering control method according to claim 11, wherein the fourth mapping relationship table is calibrated in the following modes:

generating a third initial mapping relationship table of the motor output torque, the vehicle speed and a second preset filtering gradient $M_2'$ in the brake energy recovery working condition (S2101);

controlling the vehicle to operate in the brake energy recovery working condition and different motor output torques and vehicle speeds according to the third initial mapping relationship table, and when the vehicle operates, filtering the motor request torque of the motor with the second preset filtering gradient $M_2$' in the third initial mapping relationship table corresponding to the motor output torque and the vehicle speed of the operating vehicle, to obtain a third filtering result (S2102); and

judging whether the second preset filtering gradient $M_2$' in the third initial mapping relationship table needs to be modified according to the third filtering result; if so, modifying the second preset filtering gradient $M_2$', and if not, maintaining the second preset filtering gradient $M_2$', thereby calibrating the third initial mapping relationship table as the fourth mapping relationship table (S2103).

**13.** The motor torque filtering control method according to claim 12, wherein controlling the vehicle to operate in the brake energy recovery working condition and different motor output torques and vehicle speeds according to the third initial mapping relationship table, and when the vehicle operates, filtering the motor request torque of the motor with the second preset filtering gradient $M_2$' in the third initial mapping relationship table corresponding to the motor output torque and the vehicle speed of the operating vehicle, to obtain the third filtering result, comprises:

controlling the vehicle to operate by traversing all motor output torques and vehicle speeds in the third initial mapping relationship table in the brake energy recovery working condition, and filtering the motor request torque of the motor with the second preset filtering gradient $M_2$' in the third initial mapping relationship table corresponding to the motor output torque and the vehicle speed when the vehicle operates (S2121); and

receiving vehicle running comfort fed back from a tester after filtering conducted in each mapping relationship in the third initial mapping relationship table, and taking the comfort as the third filtering result (S2122); and

judging whether the second preset filtering gradient $M_2$' in the third initial mapping relationship table needs to be modified according to the third filtering result, comprises:

judging whether the third filtering result meets third preset comfort (S2131);

when judging that the third preset comfort is met, determining that the second preset filtering gradient $M_2$' does not need to be modified (S2132); and

when judging that the third preset comfort is not met, determining that the second preset filtering gradient $M_2$' needs to be modified (S2133).

**14.** A motor torque filtering control system for a hybrid electric vehicle, comprising a control apparatus, wherein the control apparatus comprises a memory and a processor, a control program is stored in the memory, and the control program is used to implement the motor torque filtering control method according to any one of claims 1-13 when executed by the processor.

**15.** A hybrid electric vehicle, comprising the motor torque filtering control system according to claim 14.

**Patentansprüche**

**1.** Motordrehmomentfilterung-Steuerungsverfahren zum Filtern eines Motoranforderungsdrehmoments eines Hybrid-Elektrofahrzeugs, wobei das Motordrehmomentfilterung-Steuerungsverfahren die folgenden Schritte umfasst:

Bestimmen eines aktuellen Betriebszustands eines Fahrzeugs, wobei der aktuelle Betriebszustand einen Bremsenergierückgewinnung-Betriebszustand umfasst (S100);

Auswählen einer Filterstrategie, die dem aktuellen Betriebszustand entspricht, aus mehreren voreingestellten Filterstrategien gemäß dem aktuellen Betriebszustand des Fahrzeugs, um das Motoranforderungsdrehmoment des Motors zu filtern (S200); wobei,

wenn der aktuelle Betriebszustand des Fahrzeugs nicht der Bremsenergierückgewinnung-Betriebszustand ist, die ausgewählte Filterstrategie eine erste Filterstrategie ist und die erste Filterstrategie die folgenden Schritte umfasst:

Beziehen eines Fahrmodus und einer Fahrzeuggeschwindigkeit des Fahrzeugs in einem aktuellen Filterzyklus und eines vor dem Filtern im aktuellen Filterzyklus verteilten Motoranforderungsdrehmoments und Beziehen eines Motorausgangsdrehmoments nach dem Filtern in einem vorherigen Filterzyklus (S201);

Bestimmen einer vorgegebenen maximalen Filtergeschwindigkeit $V_{max}$ in Newton mal Meter pro Sekunde und einer vorgegebenen minimalen Filtergeschwindigkeit $V_{min}$ in Newton mal Meter pro Sekunde gemäß dem Fahrmodus, dem Motorausgangsdrehmoment und der Fahrzeuggeschwindigkeit (S202); **dadurch gekennzeichnet, dass** die erste Filterstrategie auch umfasst:

Bestimmen eines Interpolationskoeffizienten R, $0 \leq R \leq 1$ (S203);
Berechnen eines ersten Filtergradienten $M_1$ durch die Formel $M_1 = R \cdot V_{max} + (1 - R) \cdot V_{min}$ (S204); und
Filtern des Motoranforderungsdrehmoments des Motors gemäß dem ersten Filtergradienten $M_1$ (S205).

2. Motordrehmomentfilterung-Steuerungsverfahren nach Anspruch 1, wobei das Bestimmen der vorgegebenen maximalen Filtergeschwindigkeit $V_{max}$ und der vorgegebenen minimalen Filtergeschwindigkeit $V_{min}$ gemäß dem Fahrmodus, dem Motorausgangsdrehmoment und der Fahrzeuggeschwindigkeit die folgenden Schritte umfasst:

Nachschlagen in einer entsprechenden voreingestellten ersten Zuordnungsbeziehung-Tabelle und zweiten Zuordnungsbeziehung-Tabelle für den aktuellen Betriebszustand und Fahrmodus, wobei in der ersten Zuordnungsbeziehung-Tabelle eine Zuordnungsbeziehung des Motorausgangsdrehmoments, der Fahrzeuggeschwindigkeit und der maximalen Filtergeschwindigkeit gespeichert ist und in der zweiten Zuordnungsbeziehung-Tabelle eine Zuordnungsbeziehung des Motorausgangsdrehmoments, der Fahrzeuggeschwindigkeit und der minimalen Filtergeschwindigkeit gespeichert ist (S2021); und
Bestimmen der entsprechenden vorgegebenen maximalen Filtergeschwindigkeit $V_{max}$ und der vorgegebenen minimalen Filtergeschwindigkeit $V_{min}$ aus der ersten Zuordnungsbeziehung-Tabelle beziehungsweise der zweiten Zuordnungsbeziehung-Tabelle gemäß dem Motorausgangsdrehmoment und der Fahrzeuggeschwindigkeit des Fahrzeugs (S2022).

3. Motordrehmomentfilterung-Steuerungsverfahren nach Anspruch 2, wobei sowohl die erste Zuordnungsbeziehung-Tabelle als auch die zweite Zuordnungsbeziehung-Tabelle für jeden Betriebszustand in der folgenden Weise kalibriert wird:

Erzeugen einer ersten anfänglichen Zuordnungsbeziehung-Tabelle des Motorausgangsdrehmoments, der Fahrzeuggeschwindigkeit und einer voreingestellten Filtergeschwindigkeit V' in dem Betriebszustand, wobei die voreingestellte Filtergeschwindigkeit V' eine zu modifizierende voreingestellte maximale Filtergeschwindigkeit oder minimale Filtergeschwindigkeit ist (S1);
Steuern des Fahrzeugs, sodass es in dem Betriebszustand und bei verschiedenen Motorausgangsdrehmomenten und Fahrzeuggeschwindigkeiten gemäß der ersten anfänglichen Zuordnungsbeziehung-Tabelle betrieben wird, und, während des Betriebs des Fahrzeugs, Filtern des Motoranforderungsdrehmoments des Motors durch Übernehmen der voreingestellten Filtergeschwindigkeit V' in der ersten anfänglichen Zuordnungsbeziehung-Tabelle, die dem Motorausgangsdrehmoment und der Fahrzeuggeschwindigkeit des betriebenen Fahrzeugs entspricht, als Filtergradient, um ein erstes Filterergebnis zu erhalten (S2); und
Beurteilen anhand des ersten Filterergebnisses, ob die voreingestellte Filtergeschwindigkeit V' in der ersten anfänglichen Zuordnungsbeziehung-Tabelle modifiziert werden muss; falls ja, Modifizieren der voreingestellten Filtergeschwindigkeit V', und falls nicht, Behalten der voreingestellten Filtergeschwindigkeit V', wodurch die erste anfängliche Zuordnungsbeziehung-Tabelle als die erste Zuordnungsbeziehung-Tabelle oder die zweite Zuordnungsbeziehung-Tabelle kalibriert wird (S3).

4. Motordrehmomentfilterung-Steuerungsverfahren nach Anspruch 3, wobei das Steuern des Fahrzeugs, sodass es in dem Betriebszustand und bei verschiedenen Motorausgangsdrehmomenten und Fahrzeuggeschwindigkeiten gemäß der ersten anfänglichen Zuordnungsbeziehung-Tabelle betrieben wird, und, während des Betriebs des Fahrzeugs, Filtern des Motoranforderungsdrehmoments des Motors durch Übernehmen der voreingestellten Filtergeschwindigkeit V' in der ersten anfänglichen Zuordnungsbeziehung-Tabelle, die dem Motorausgangsdrehmoment und der Fahrzeuggeschwindigkeit des betriebenen Fahrzeugs entspricht, als Filtergradient, um ein erstes Filterergebnis zu erhalten, umfasst:

Steuern des Fahrzeugs, sodass es unter Durchlauf aller Motorausgangsdrehmomente und Fahrzeuggeschwindigkeiten in der anfänglichen Zuordnungsbeziehung-Tabelle für den Betriebszustand betrieben wird, und Filtern des Motoranforderungsdrehmoments des Motors durch Übernehmen der voreingestellten Filtergeschwindigkeit V' in der anfänglichen Zuordnungsbeziehung-Tabelle, die dem Motorausgangsdrehmoment und der Fahrzeuggeschwindigkeit entspricht, bei denen das Fahrzeug betrieben wird, als Filtergradient (S21); und
Empfangen eines Fahrzeug-Fahrkomforts, der von einem Tester nach dem in j eder Zuordnungsbeziehung in der anfänglichen Zuordnungsbeziehung-Tabelle durchgeführten Filtern zurückgegeben wird, und Übernehmen des Komforts als das erste Filterergebnis (S22); und

das Beurteilen anhand des ersten Filterergebnisses, ob die voreingestellte Filtergeschwindigkeit V' in der ersten anfänglichen Zuordnungsbeziehung-Tabelle modifiziert werden muss, umfasst:

Beurteilen, ob das erste Filterergebnis einen ersten voreingestellten Komfort erfüllt (S31);
wenn beurteilt wird, dass der erste voreingestellte Komfort erfüllt ist, Bestimmen, dass die voreingestellte Filtergeschwindigkeit V' nicht modifiziert werden muss (S32); und,
wenn beurteilt wird, dass der erste voreingestellte Komfort nicht erfüllt ist, Bestimmen, dass die voreingestellte Filtergeschwindigkeit V' modifiziert werden muss (S33).

5. Motordrehmomentfilterung-Steuerungsverfahren nach einem der Ansprüche 2 bis 4, wobei der Fahrmodus einen reinen Elektro-Fahrmodus, einen seriellen Fahrmodus oder einen parallelen Fahrmodus umfasst;

wobei der aktuelle Betriebszustand des Fahrzeugs auch mindestens einen der folgenden Zustände umfasst: einen Pedalbetätigung-Betriebszustand, einen Pedalfreigabe-Betriebszustand, einen Betriebszustand mit Drehmoment über null und einen Vollgasbeschleunigungs-Betriebszustand; und
die erste Zuordnungsbeziehung-Tabelle, die einem aktuellen Betriebszustand entspricht, der der Betriebszustand mit Drehmoment über null ist, verschieden ist von der ersten Zuordnungsbeziehung-Tabelle, die einem aktuellen Betriebszustand entspricht, der nicht der Betriebszustand mit Drehmoment über null ist, und die zweite Zuordnungsbeziehung-Tabelle, die einem aktuellen Betriebszustand entspricht, der der Betriebszustand mit Drehmoment über null ist, verschieden ist von der zweiten Zuordnungsbeziehung-Tabelle, die einem aktuellen Betriebszustand entspricht, der nicht der Betriebszustand mit Drehmoment über null ist.

6. Motordrehmomentfilterung-Steuerungsverfahren nach Anspruch 5, wobei ein Verfahren zum Bestimmen, dass der aktuelle Betriebszustand des Fahrzeugs der Pedalbetätigung-Betriebszustand und der Betriebszustand mit Drehmoment über null ist, die folgenden Schritte umfasst:

Bestimmen, dass das Fahrzeug im Pedalbetätigung-Betriebszustand ist, wenn ein Fahrpedal des Fahrzeugs gedrückt ist (S101);
nach dem Bestimmen, dass das Fahrzeug im Pedalbetätigung-Betriebszustand ist, Beurteilen, ob das Motorausgangsdrehmoment nach dem Filtern in einem (P-2)-ten Filterzyklus kleiner als ein voreingestelltes Ausgangsdrehmoment ist, wobei das voreingestellte Ausgangsdrehmoment kleiner als null ist und der aktuelle Filterzyklus ein P-ter Filterzyklus ist (S102);
wenn das Motorausgangsdrehmoment im (P-2)-ten Filterzyklus kleiner als das erste voreingestellte Ausgangsdrehmoment ist, Beurteilen, ob das Motoranforderungsdrehmoment in einem (P-1)-ten Filterzyklus größer als ein voreingestelltes erstes Anforderungsdrehmoment ist und ob das Motorausgangsdrehmoment nach dem Filtern in dem (P-1)-ten Filterzyklus größer als ein zweites voreingestelltes Ausgangsdrehmoment ist, wobei das erste voreingestellte Anforderungsdrehmoment größer als null ist und das zweite voreingestellte Ausgangsdrehmoment kleiner als oder gleich dem ersten voreingestellten Ausgangsdrehmoment ist (S 103); und,
wenn das Motoranforderungsdrehmoment im (P-1)-ten Filterzyklus größer als das erste voreingestellte Anforderungsdrehmoment ist und das Motorausgangsdrehmoment nach dem Filtern im (P-1)-ten Filterzyklus größer als das zweite voreingestellte Ausgangsdrehmoment ist, Bestimmen, dass der Motor im aktuellen Filterzyklus in dem Betriebszustand mit Drehmoment über null ist (S104).

7. Motordrehmomentfilterung-Steuerungsverfahren nach Anspruch 5, wobei ein Verfahren zum Bestimmen, dass der aktuelle Betriebszustand des Fahrzeugs der Pedalfreigabe-Betriebszustand und der Betriebszustand mit Drehmoment über null ist, die folgenden Schritte umfasst:

Bestimmen, dass das Fahrzeug im Pedalfreigabe-Betriebszustand ist, wenn das Fahrpedal des Fahrzeugs nicht gedrückt ist (S310);
nach dem Bestimmen, dass das Fahrzeug im Pedalfreigabe-Betriebszustand ist, Beurteilen, ob das Motorausgangsdrehmoment nach dem Filtern im (P-2)-ten Filterzyklus größer als ein drittes voreingestelltes Ausgangsdrehmoment ist, wobei das dritte voreingestellte Ausgangsdrehmoment größer als null ist und der aktuelle Filterzyklus ein P-ter Filterzyklus ist (S320);
wenn das Motorausgangsdrehmoment des (P-2)-ten Filterzyklus größer als das dritte voreingestellte Ausgangsdrehmoment ist, Beurteilen, ob das Motoranforderungsdrehmoment im (P-1)-ten Filterzyklus kleiner als ein zweites voreingestelltes Anforderungsdrehmoment ist und ob das Motorausgangsdrehmoment nach dem Filtern im (P-1)-ten Filterzyklus kleiner als ein viertes voreingestelltes Ausgangsdrehmoment ist, wobei das zweite voreingestellte Anforderungsdrehmoment kleiner als null ist und das vierte voreingestellte Ausgangsdrehmoment größer als oder gleich dem dritten voreingestellten Ausgangsdrehmoment ist (S330); und, wenn das Motoranforderungsdrehmoment im (P-1)-ten Filterzyklus kleiner als das zweite voreingestellte Anforderungsdrehmoment ist und das Motorausgangsdrehmoment nach dem Filtern im (P-1)-ten Filterzyklus kleiner als das vierte voreingestellte Ausgangsdrehmoment ist, Bestimmen, dass der Motor im aktuellen Filterzyklus in dem Betriebszustand mit Drehmoment über null ist (S340).

8. Motordrehmomentfilterung-Steuerungsverfahren nach Anspruch 5, wobei das Bestimmen des Interpolationskoeffizienten R die folgenden Schritte umfasst:

Auswählen eines Interpolationskoeffizient-Bestimmungsverfahrens, das dem aktuellen Betriebszustand entspricht, aus mehreren Interpolationskoeffizient-Bestimmungsverfahren gemäß dem aktuellen Betriebszustand des Fahrzeugs (S2031); und
Bestimmen des Interpolationskoeffizienten R gemäß dem ausgewählten Interpolationskoeffizient-Bestimmungsverfahren (S2032), wobei, wenn der aktuelle Betriebszustand des Fahrzeugs der Vollgasbeschleunigungs-Betriebszustand ist, das ausgewählte Interpolationskoeffizient-Bestimmungsverfahren direkt bestimmt, dass der Interpolationskoeffizient R gleich einem voreingestellten Festwert ist, wobei, wenn der aktuelle Betriebszustand des Fahrzeugs nicht der Vollgasbeschleunigungs-Betriebszustand ist, das ausgewählte Interpolationskoeffizient-Bestimmungsverfahren die folgenden Schritte umfasst:

Nachschlagen in einer entsprechenden voreingestellten dritten Zuordnungsbeziehung-Tabelle für den aktuellen Betriebszustand, wobei in der dritten Zuordnungsbeziehung-Tabelle Zuordnungsbeziehungen von verschiedenen Motoranforderungsdrehmomenten, Fahrzeuggeschwindigkeiten und Interpolationskoeffizienten R gespeichert sind; und
Bestimmen des entsprechenden Interpolationskoeffizienten R aus der dritten Zuordnungsbeziehung-Tabelle gemäß dem Motoranforderungsdrehmoment und der Fahrzeuggeschwindigkeit im aktuellen Betriebszustand.

9. Motordrehmomentfilterung-Steuerungsverfahren nach Anspruch 8, wobei die dritte Zuordnungsbeziehung-Tabelle in jedem Betriebszustand in der folgenden Weise kalibriert wird:

Erzeugen einer zweiten anfänglichen Zuordnungsbeziehung-Tabelle des Motoranforderungsdrehmoments, der Fahrzeuggeschwindigkeit und eines voreingestellten Koeffizienten R' in dem Betriebszustand (S231);
Steuern des Fahrzeugs, sodass es in dem Betriebszustand und bei verschiedenen Motoranforderungsdrehmomenten und Fahrzeuggeschwindigkeiten gemäß der zweiten anfänglichen Zuordnungsbeziehung-Tabelle betrieben wird, und Berechnen eines ersten anfänglichen Filtergradienten $M_1'$ durch die Formel $M_1' = R' \cdot V_{max} + (1 - R') \cdot V_{min}$ gemäß der bestimmten maximalen Filtergeschwindigkeit $V_{max}$ und der minimalen Filtergeschwindigkeit $V_{min}$ entsprechend den verschiedenen Motorausgangsdrehmomenten und Fahrzeuggeschwindigkeiten und dem voreingestellten Koeffizienten R' entsprechend den verschiedenen Motoranforderungsdrehmomenten und Fahrzeuggeschwindigkeiten, die aus der zweiten anfänglichen Zuordnungsbeziehung-Tabelle bestimmt wurden (S232);
Filtern des Motoranforderungsdrehmoments des Motors gemäß dem ersten anfänglichen Filtergradienten $M_1'$ während des Betriebs des Fahrzeugs, um ein zweites Filterergebnis zu erhalten (S233); und
Beurteilen anhand des zweiten Filterergebnisses, ob der voreingestellte Koeffizient R' in der zweiten anfänglichen Zuordnungsbeziehung-Tabelle modifiziert werden muss; falls ja, Modifizieren des voreingestellten Koeffizienten R', und falls nicht, Behalten des voreingestellten Koeffizienten R', wodurch die zweite anfängliche Zuordnungsbeziehung-Tabelle als die dritte Zuordnungsbeziehung-Tabelle kalibriert wird (S234).

10. Motordrehmomentfilterung-Steuerungsverfahren nach Anspruch 9, wobei das Filtern des Motoranforderungsdrehmoments des Motors gemäß dem ersten anfänglichen Filtergradienten $M_1'$ während des Betriebs des Fahrzeugs, um das zweite Filterergebnis zu erhalten, umfasst:

Filtern des Motoranforderungsdrehmoments des Motors mit dem ersten anfänglichen Filtergradienten $M_1'$, während das Fahrzeug unter Durchlauf aller Motoranforderungsdrehmomente und Fahrzeuggeschwindigkeiten in der zweiten anfänglichen Zuordnungsbeziehung-Tabelle betrieben wird (S2331); und
Empfangen eines Fahrzeug-Fahrkomforts, der von einem Tester nach dem in j eder Zuordnungsbeziehung in der zweiten anfänglichen Zuordnungsbeziehung-Tabelle durchgeführten Filtern zurückgegeben wird, und Übernehmen des Komforts als das zweite Filterergebnis (S2332); und
das Beurteilen anhand des zweiten Filterergebnisses, ob der voreingestellte Koeffizient R' in der zweiten anfänglichen Zuordnungsbeziehung-Tabelle modifiziert werden muss, umfasst:

Beurteilen, ob das zweite Filterergebnis den zweiten voreingestellten Komfort erfüllt;
wenn beurteilt wird, dass der zweite voreingestellte Komfort erfüllt ist, Bestimmen, dass der voreingestellte Koeffizient R' nicht modifiziert werden muss; und,
wenn beurteilt wird, dass der zweite voreingestellte Komfort nicht erfüllt ist, Bestimmen, dass der voreingestellte Koeffizient R' modifiziert werden muss.

11. Motordrehmomentfilterung-Steuerungsverfahren nach Anspruch 1, wobei, wenn der aktuelle Betriebszustand des Fahrzeugs der Bremsenergierückgewinnung-Betriebszustand ist, die ausgewählte Filterstrategie eine zweite Filterstrategie ist und die zweite Filterstrategie die folgenden Schritte umfasst:

Nachschlagen in einer voreingestellten vierten Zuordnungsbeziehung-Tabelle für den Bremsenergierückgewinnung-Betriebszustand, wobei in der vierten Zuordnungsbeziehung-Tabelle eine Zuordnungsbeziehung eines Motorausgangsdrehmoments, einer Fahrzeuggeschwindigkeit und eines zweiten Filtergradienten $M_2$ gespeichert ist (S210);
Bestimmen des entsprechenden zweiten Filtergradienten $M_2$ aus der vierten Zuordnungsbeziehung-Tabelle gemäß dem Motorausgangsdrehmoment und der Fahrzeuggeschwindigkeit (S220); und
Filtern des Motoranforderungsdrehmoments des Motors gemäß dem zweiten Filtergradienten $M_2$ (S230).

12. Motordrehmomentfilterung-Steuerungsverfahren nach Anspruch 11, wobei die vierte Zuordnungsbeziehung-Tabelle in der folgenden Weise kalibriert wird:

Erzeugen einer dritten anfänglichen Zuordnungsbeziehung-Tabelle des Motorausgangsdrehmoments, der Fahrzeuggeschwindigkeit und eines zweiten voreingestellten Filtergradienten $M_2$' im Bremsenergierückgewinnung-Betriebszustand (S2101);
Steuern des Fahrzeugs, sodass es im Bremsenergierückgewinnung-Betriebszustand und bei verschiedenen Motorausgangsdrehmomenten und Fahrzeuggeschwindigkeiten gemäß der dritten anfänglichen Zuordnungsbeziehung-Tabelle betrieben wird, und, während des Betriebs des Fahrzeugs, Filtern des Motoranforderungsdrehmoments des Motors mit dem zweiten voreingestellten Filtergradienten $M_2$' in der dritten anfänglichen Zuordnungsbeziehung-Tabelle entsprechend dem Motorausgangsdrehmoment und der Fahrzeuggeschwindigkeit des betriebenen Fahrzeugs, um ein drittes Filterergebnis zu erhalten (S2102); und
Beurteilen anhand des dritten Filterergebnisses, ob der zweite voreingestellte Filtergradient $M_2$' in der dritten anfänglichen Zuordnungsbeziehung-Tabelle modifiziert werden muss; falls ja, Modifizieren des zweiten voreingestellten Filtergradienten $M_2$', und falls nicht, Behalten des zweiten voreingestellten Filtergradienten $M_2$', wodurch die dritte anfängliche Zuordnungsbeziehung-Tabelle als die vierte Zuordnungsbeziehung-Tabelle kalibriert wird (S2103).

13. Motordrehmomentfilterung-Steuerungsverfahren nach Anspruch 12, wobei das Steuern des Fahrzeugs, sodass es im Bremsenergierückgewinnung-Betriebszustand und bei verschiedenen Motorausgangsdrehmomenten und Fahrzeuggeschwindigkeiten gemäß der dritten anfänglichen Zuordnungsbeziehung-Tabelle betrieben wird, und, während des Betriebs des Fahrzeugs, Filtern des Motoranforderungsdrehmoments des Motors mit dem zweiten voreingestellten Filtergradienten $M_2$' in der dritten anfänglichen Zuordnungsbeziehung-Tabelle entsprechend dem Motorausgangsdrehmoment und der Fahrzeuggeschwindigkeit des betriebenen Fahrzeugs, um ein drittes Filterergebnis zu erhalten, umfasst:

Steuern des Fahrzeugs, sodass es unter Durchlauf aller Motorausgangsdrehmomente und Fahrzeuggeschwindigkeiten in der dritten anfänglichen Zuordnungsbeziehung-Tabelle für den Bremsenergierückgewinnung-Betriebszustand betrieben wird, und Filtern des Motoranforderungsdrehmoments des Motors mit dem zweiten voreingestellten Filtergradienten $M_2$' in der dritten anfänglichen Zuordnungsbeziehung-Tabelle, die dem Motorausgangsdrehmoment und der Fahrzeuggeschwindigkeit entspricht, bei denen das Fahrzeug betrieben wird (S2121); und
Empfangen eines Fahrzeug-Fahrkomforts, der von einem Tester nach dem in j eder Zuordnungsbeziehung in der dritten anfänglichen Zuordnungsbeziehung-Tabelle durchgeführten Filtern zurückgegeben wird, und Übernehmen des Komforts als das dritte Filterergebnis (S2122); und
das Beurteilen anhand des dritten Filterergebnisses, ob der zweite voreingestellte Filtergradient $M_1$' in der dritten anfänglichen Zuordnungsbeziehung-Tabelle modifiziert werden muss, umfasst:

Beurteilen, ob das dritte Filterergebnis den dritten voreingestellten Komfort erfüllt (S2131);

wenn beurteilt wird, dass der dritte voreingestellte Komfort erfüllt ist, Bestimmen, dass der zweite voreingestellte Filtergradient $M_2$' nicht modifiziert werden muss (S2132); und,

wenn beurteilt wird, dass der dritte voreingestellte Komfort nicht erfüllt ist, Bestimmen, dass der zweite voreingestellte Filtergradient $M_2$' modifiziert werden muss (S2133).

14. Motordrehmomentfilterung-Steuerungssystem für ein Hybrid-Elektrofahrzeug, aufweisend eine Steuerungsvorrichtung, wobei die Steuerungsvorrichtung einen Speicher und einen Prozessor aufweist, ein Steuerungsprogramm in dem Speicher gespeichert ist und das Steuerungsprogramm dazu verwendet wird, das Motordrehmomentfilterung-Steuerungsverfahren nach einem der Ansprüche 1 bis 13 umzusetzen, wenn es von dem Prozessor ausgeführt wird.

15. Hybrid-Elektrofahrzeug mit dem Motordrehmomentfilterung-Steuerungssystem nach Anspruch 14.

**Revendications**

1. Un procédé de commande de filtrage de couple de moteur, pour filtrer le couple de demande de moteur d'un véhicule électrique hybride, dans lequel le procédé de commande de filtrage de couple de moteur comprend les étapes suivantes :

déterminer un état de fonctionnement en cours d'un véhicule, l'état de fonctionnement en cours, y compris l'état de fonctionnement de récupération d'énergie de freinage (S 100) ;

sélectionner une stratégie de filtrage correspondant à l'état de fonctionnement en cours parmi plusieurs stratégies de filtrage prédéfinies en fonction de l'état de fonctionnement en cours du véhicule, pour filtrer le couple de demande de moteur (S200); dans lequel

lorsque l'état de fonctionnement en cours du véhicule ne correspond pas à l'état de fonctionnement de récupération d'énergie de freinage, la stratégie de filtrage sélectionnée est une première stratégie de filtrage, et la première stratégie de filtrage comprend les étapes suivantes :

obtenir un mode de conduite et une vitesse du véhicule dans un cycle de filtrage en cours et un couple de demande de moteur distribué avant le filtrage dans le cycle de filtrage en cours, et obtenir un couple de sortie de moteur après le filtrage dans un cycle de filtrage précédent (S201);

déterminer une vitesse de filtrage maximale cible $V_{max}$ , en Newtons fois mètre par seconde, et une vitesse de filtrage minimale cible $V_{min}$ , en Newtons fois mètre par seconde, en fonction du mode de conduite, du couple de sortie de moteur et de la vitesse du véhicule (S202); **caractérisé en ce que** la première stratégie de filtrage comprend également:

déterminer un coefficient d'interpolation R, O≤R≤1 (S203);

calculer un premier gradient de filtrage $M_1$ par l'intermédiaire d'une formule

$$M_l = R * V_{max} + (l-R) * V_{min} \text{ (S204)} ;$$

et

filtrer le couple de demande de moteur du moteur conformément au premier gradient de filtrage $M_1$ (S205).

2. Le procédé de commande de filtrage de couple de moteur selon la revendication 1, dans lequel pour déterminer la vitesse de filtrage maximale cible $V_{max}$ et la vitesse de filtrage minimale cible $V_{min}$ en fonction du mode de conduite, le couple de sortie de moteur et la vitesse du véhicule comprennent les étapes suivantes :

consulter une première table de relations de mappage prédéfinie correspondante et une deuxième table de relations de mappage dans l'état de fonctionnement et le mode de conduite en cours, la première table de relations de mappage stocke une relation de mappage du couple de sortie de moteur, la vitesse du véhicule et la vitesse de filtrage maximale, et la deuxième table de relations de mappage stocke une relation de mappage du couple de sortie de moteur, la vitesse du véhicule et la vitesse de filtrage minimale (S2021); et

déterminer la vitesse de filtrage maximale cible correspondante $V_{max}$ et la vitesse de filtrage minimale cible $V_{min}$ à partir de la première table de relations de mappage et de la deuxième table de relations de mappage respectivement en fonction du couple de sortie de moteur et de la vitesse du véhicule (S2022).

3. Le procédé de commande de filtrage de couple de moteur selon la revendication 2, dans lequel chacune des première et deuxième tables de relations de mappage dans chaque état de fonctionnement est calibrée selon les modes suivants :

générer une première table de relations de mappage initiale du couple de sortie de moteur, la vitesse du véhicule et une vitesse de filtrage prédéfinie V' dans le cadre de l'état de fonctionnement, la vitesse de filtrage prédéfinie V' étant une vitesse de filtrage maximale prédéfinie ou une vitesse de filtrage minimale à modifier (S1) ;

commander le véhicule pour qu'il fonctionne selon les états de fonctionnement et différents couples de sortie de moteur et des vitesses du véhicule en fonction de la première table de relations de mappage initiale, et lorsque le véhicule fonctionne, filtrer le couple de demande de moteur du moteur en prenant la vitesse de filtrage préréglée V' dans la première table de relations de mappage initiale correspondant au couple de sortie de moteur et à la vitesse de véhicule du véhicule en train de fonctionner comme un gradient de filtrage, pour obtenir un premier résultat de filtrage (S2) ; et

déterminer si la vitesse de filtrage prédéfinie V' dans la première table de relations de mappage initiale doit être modifiée en fonction du premier résultat de filtrage, si c'est le cas, modifier la vitesse de filtrage prédéfinie V', et si ce n'est pas le cas, conserver la vitesse de filtrage prédéfinie V', calibrant ainsi la première table de relations de mappage initiale comme la première table de relations de mappage ou la deuxième table de relations de mappage (S3).

4. Le procédé de commande de filtrage de couple de moteur selon la revendication 3, dans lequel le véhicule est commandé pour qu'il fonctionne selon des états de fonctionnement et différents couples de sortie de moteur et des vitesses du véhicule en fonction de la première table de relations de mappage initiale, et lorsque le véhicule fonctionne, filtrer le couple de demande de moteur du moteur en prenant la vitesse de filtrage prédéfinie V' dans la première table de relations de mappage initiale correspondant au couple de sortie de moteur et la vitesse du lorsque le véhicule fonctionne comme le gradient de filtrage, pour obtenir le premier résultat de filtrage, comprenant:

commander le fonctionnement du véhicule en parcourant tous les couples de sortie de moteur et les vitesses du véhicule dans la première table de relations de mappage initiale dans les états de fonctionnement, et le filtrage du couple de demande de moteur en prenant la vitesse de filtrage prédéfinie V' dans la première table de relations de mappage initiale correspondant au couple de sortie de moteur et la vitesse du véhicule lorsque le véhicule fonctionne comme le gradient de filtrage (S21) ; et

obtenir un confort de fonctionnement du véhicule renvoyé par un testeur après que le filtrage soit effectué dans chaque relation de mappage dans la première table de relations de mappage initiale, et en prenant le confort comme le premier résultat de filtrage (S22) ; et

déterminer si la vitesse de filtrage prédéfinie V' dans la première table de relations de mappage initiale doit être modifiée en fonction du premier résultat de filtrage, qui comprend:

déterminer si le premier résultat de filtrage correspond au premier confort prédéfini (S31) ;

lorsqu'on estime que le premier confort prédéfini est atteint, déterminer si la vitesse de filtrage prédéfinie V' n'a pas besoin d'être modifiée (S32) ; et

lorsqu'on estime que le premier confort prédéfini n'est pas atteint, déterminer si la vitesse de filtrage prédéfinie V' doit être modifiée (S33).

5. Le procédé de commande de filtrage de couple de moteur selon l'une quelconque des revendications 2-4, dans lequel le mode de conduite comprend un mode de conduite purement électrique, un mode de conduite en série ou un mode de conduite parallèle;

dans lequel l'état de fonctionnement en cours du véhicule comprend également au moins l'un des points suivantes: un état de fonctionnement en appuyant sur la pédale, un état de fonctionnement de libération de la pédale, un état de fonctionnement du couple au-dessus de zéro et un état de fonctionnement en accélérant à plein régime; et

la première table de relations de mappage correspondant à l'état de fonctionnement en cours, à savoir l'état de fonctionnement du couple au-dessus de zéro, est différente de la première table de relations de mappage correspondant à l'état de fonctionnement en cours à savoir tout autre état de fonctionnement que l'état de fonctionnement du couple au-dessus de zéro, et la deuxième table de relations de mappage correspondant à l'état de fonctionnement en cours à savoir l'état de fonctionnement du couple au-dessus de zéro est différente de la deuxième table de relations de mappage correspondant à l'état de fonctionnement en cours tout autre que l'état de fonctionnement du couple au-dessus de zéro.

**6.** Le procédé de commande de filtrage de couple de moteur selon la revendication 5, dans lequel un procédé permettant de déterminer si l'état de fonctionnement en cours du véhicule est l'état de fonctionnement en appuyant sur la pédale et si l'état de fonctionnement du couple est au-dessus de zéro, comprend les étapes suivantes :

déterminer si le véhicule est dans un état de fonctionnement en appuyant sur la pédale lorsque l'on appuie sur une pédale d'accélérateur du véhicule (S 101);
après avoir déterminé si le véhicule est dans un état de fonctionnement en appuyant sur la pédale, déterminer si le couple de sortie de moteur après filtrage dans un cycle de filtrage(P-2)ème est inférieur à un premier couple de sortie prédéfini, le premier couple de sortie prédéfini étant inférieur à zéro, et un cycle de filtrage Pème est le cycle de filtrage en cours (S 102) ;
lorsque le couple de sortie du moteur dans le cycle de filtrage (P-2)ème est inférieur au premier couple de sortie prédéfini, déterminer si le couple de demande de moteur dans un cycle de filtrage (P-1)ème est supérieur à un premier couple de demande prédéfini et si le couple de sortie de moteur après filtrage dans le cycle de filtrage (P-1)ème est supérieur à un deuxième couple de sortie prédéfini, le premier couple de demande prédéfini étant supérieur à zéro et le deuxième couple de sortie prédéfini étant inférieur ou égal au premier couple de sortie prédéfini (S 103) ; et
lorsque le couple de demande de moteur dans le cycle de filtrage (P-1)ème est supérieur au premier couple de demande prédéfini, et que le couple de sortie de moteur après filtrage dans le cycle de filtrage (P-1)ème est supérieur au deuxième couple de sortie prédéfini, déterminer si le moteur est dans un état de fonctionnement du couple au-dessus de zéro dans le cycle de filtrage en cours (S 104).

**7.** Le procédé de commande de filtrage de couple de moteur selon la revendication 5, dans lequel un procédé pour déterminer si l'état de fonctionnement en cours du véhicule correspond à l'état de fonctionnement de libération de la pédale et si l'état de fonctionnement du couple au-dessus de zéro, comprend les étapes suivantes :

déterminer si le véhicule est en état de fonctionnement de libération de la pédale lorsque la pédale d'accélérateur du véhicule est relâchée (S3 10);
après avoir déterminé si véhicule est dans un état de fonctionnement de libération de la pédale, déterminer si le couple de sortie du moteur après filtrage dans le cycle de filtrage (P-2)ème est supérieur à un troisième couple de sortie prédéfini, le troisième couple de sortie prédéfini étant supérieur à zéro, et un cycle de filtrage Pème étant le cycle de filtrage en cours (S320) :

lorsque le couple de sortie du moteur du cycle de filtrage (P-2)ème est supérieur au troisième couple de sortie prédéfini, déterminer si le couple de demande de moteur dans le cycle de filtrage (P-1)ème est inférieur à un deuxième couple de demande prédéfini et si le couple de sortie de moteur après filtrage dans le cycle de filtrage (P-1)ème est inférieur à un quatrième couple de sortie prédéfini, le deuxième couple de sortie prédéfini étant inférieur à zéro, et le quatrième couple de sortie prédéfini est supérieur ou égal au troisième couple de sortie prédéfini (S330) ; et
lorsque le couple de demande de moteur dans le cycle de filtrage (P-1)ème est inférieur au deuxième couple de demande prédéfini, et que le couple de sortie de moteur après filtrage dans le cycle de filtrage (P-1)ème est inférieur au quatrième couple de sortie prédéfini, déterminer si le moteur est dans un état de fonctionnement du couple au-dessus de zéro dans le cycle de filtrage en cours (S340).

**8.** Le procédé de commande de filtrage de couple de moteur selon la revendication 5, dans lequel déterminer le coefficient d'interpolation R, comprend les étapes suivantes :

sélectionner un procédé relatif à la détermination du coefficient d'interpolation correspondant à l'état de fonctionnement en cours à partir de plusieurs procédés consistant à déterminer le coefficient d'interpolation en fonction de l'état de fonctionnement en cours du véhicule (S2031); et
déterminer le coefficient d'interpolation R selon le procédé consistant à déterminer le coefficient d'interpolation sélectionné (S2032), dans lequel, lorsque l'état de fonctionnement en cours du véhicule est l'état de fonctionnement en accélérant à plein régime, le procédé consistant à déterminer le coefficient d'interpolation sélectionné détermine directement si le coefficient d'interpolation R est égal à une valeur fixe prédéfinie, dans lequel lorsque l'état de fonctionnement en cours du véhicule n'est pas l'état de fonctionnement en accélérant à plein régime, le procédé consistant à déterminer le coefficient d'interpolation sélectionné comprend les étapes suivantes :

consulter une troisième table de relations de mappage prédéfinie correspondante dans le cadre de l'état de fonctionnement en cours, la troisième table de relations de mappage stocke les relations de mappage de différents couples de demande de moteur, des vitesses du véhicule et des coefficients d'interpolation R; et déterminer le coefficient d'interpolation R correspondant à partir de la troisième table de relations de mappage en fonction du couple de demande de moteur et de la vitesse du véhicule dans l'état de fonctionnement en cours.

9. Le procédé de commande de filtrage de couple de moteur selon la revendication 8, dans lequel la troisième table de relations de mappage dans chaque état de fonctionnement est calibrée selon les modes suivants :

générer une deuxième table de relations de mappage initiale du couple de demande de moteur, de la vitesse du véhicule et d'un coefficient prédéfini R' dans l'état de fonctionnement (S231); commander le véhicule pour qu'il fonctionne selon l'état de fonctionnement et différents couples de demande de moteur et des vitesses du véhicule en fonction de la deuxième table de relations de mappage initiale, et calculer un premier gradient de filtrage initial $M_1'$ par l'intermédiaire de la formule $M_l'=R'^*V_{max}+(I-R')^*Vmin$ en fonction de la vitesse de filtrage maximale déterminée $V_{max}$ et de la vitesse minimale de filtrage $V_{min}$ correspondant à différents couples de sortie de moteur et à des vitesses du véhicule et le coefficient prédéfini R' correspondant aux différents couples de demande de moteur et aux vitesses du véhicule déterminés à partir de la deuxième table de relations de mappage initiale (S232); filtrer le couple de demande de moteur en fonction du premier gradient de filtrage initial $M_1'$ lorsque le véhicule fonctionne, pour obtenir un deuxième résultat de filtrage (S233); et déterminer si le coefficient prédéfini R' dans la deuxième table de relations de mappage initiale doit être modifié en fonction du deuxième résultat de filtrage; si c'est le cas, modifier le coefficient prédéfini R', et si ce n'est pas le cas, conserver le coefficient prédéfini R', en calibrant ainsi la deuxième table de relations de mappage initiale comme la troisième table de relations de mappage (S234).

10. Le procédé de commande de filtrage de couple de moteur selon la revendication 9, dans lequel le filtrage de couple de demande de moteur du moteur conformément au premier gradient de filtrage $M_1'$ lorsque le véhicule fonctionne, pour obtenir le deuxième résultat de filtrage, comprend:

filtrer le couple de demande de moteur du moteur avec le premier gradient de filtrage initial $M_1'$ lorsque le véhicule fonctionne en parcourant tous les couples de demande de moteur et toutes les vitesses du véhicule dans la deuxième table de relations de mappage initiale (S2331); et obtenir le confort de fonctionnement du véhicule renvoyé par un testeur après que le filtrage soit effectué dans chaque relation de mappage dans la deuxième table de relations de mappage initiale, et choisir le confort comme le deuxième résultat de filtrage (S2332) ; et déterminer si le coefficient prédéfini R' dans la deuxième table de relations de mappage initiale doit être modifié en fonction du deuxième résultat de filtrage, qui comprend:

déterminer si le deuxième résultat de filtrage correspond au deuxième confort prédéfini; lorsqu'on estime que le deuxième confort prédéfini est atteint, déterminer si le coefficient prédéfini R' n'a pas besoin d'être modifié; et lorsqu'on estime que le deuxième confort prédéfini n'est pas atteint, déterminer si le coefficient prédéfini R' doit être modifié.

11. Le procédé de commande de filtrage de couple de moteur selon la revendication 1, dans lequel, lorsque l'état de fonctionnement en cours du véhicule est l'état de fonctionnement de récupération d'énergie de freinage, la stratégie de filtrage sélectionnée est une deuxième stratégie de filtrage, et la deuxième stratégie de filtrage comprend les étapes suivantes :

consulter une quatrième table de relations de mappage prédéfinie correspondant à l'état de fonctionnement de récupération d'énergie de freinage, la quatrième table de relations de mappage stocke une relation de mappage d'un couple de sortie de moteur, d'une vitesse de véhicule et d'un deuxième gradient de filtrage $M_2$ (S210) ; déterminer un deuxième gradient de filtrage correspondant M2 à partir de la quatrième table de relations de mappage en fonction du couple de sortie de moteur et de la vitesse du véhicule (S220); et
filtrer le couple de demande de moteur selon le deuxième gradient de filtrage $M_2$ (S230).

12. Le procédé de commande de filtrage de couple de moteur selon la revendication 11, dans lequel la quatrième table de relations de mappage est calibrée selon les modes suivants :

générer une troisième table de relations de mappage initiale du couple de sortie de moteur, de la vitesse du véhicule et d'un deuxième gradient de filtrage prédéfini $M_2$' dans l'état de de fonctionnement de récupération d'énergie de freinage (S2101) ;
commander le véhicule pour qu'il fonctionne selon l'état de fonctionnement de récupération d'énergie de freinage; différents couples de sortie de moteur et des vitesses du véhicule en fonction de la troisième table de relations de mappage initiale, et lorsque le véhicule fonctionne, filtrer le couple de demande de moteur du moteur avec le deuxième gradient de filtrage prédéfini $M_2$' dans la troisième table de relations de mappage initiale correspondant au couple de sortie de moteur et à la vitesse du véhicule qui fonctionne, pour obtenir un troisième résultat de filtrage (S2102) ; et
déterminer si le deuxième gradient de filtrage prédéfini $M_2$' dans la troisième table de relations de mappage initiale doit être modifié en fonction du résultat du troisième filtrage; si c'est le cas, modifier le deuxième gradient de filtrage prédéfini $M_2$', et si ce n'est pas le cas, conserver le deuxième gradient de filtrage prédéfini $M_2$', en calibrant ainsi la troisième table de relations de mappage initiale comme la quatrième table de relations de mappage (S2103).

13. Le procédé de commande de filtrage de couple de moteur selon la revendication 12, dans lequel la commande du véhicule pour fonctionner selon l'état de fonctionnement de récupération d'énergie de freinage; différents couples de sortie de moteur et des vitesses du véhicule en fonction de la troisième table de relations de mappage initiales, et lorsque le véhicule fonctionne, filtrer le couple de demande de moteur avec le deuxième gradient de filtrage préréglé $M_2$' dans la troisième table de relations de mappage initiale correspondant au couple de sortie de moteur et à la vitesse du véhicule qui fonctionne, pour obtenir le troisième filtrage résultat, qui comprend :

commander le fonctionnement du véhicule en parcourant tous les couples de sortie de moteur et les vitesses du véhicule dans la troisième table de relations de mappage initiale dans l'état de fonctionnement de récupération d'énergie de freinage, et filtrer le couple de demande de moteur avec le deuxième gradient de filtrage prédéfini M2' dans la troisième table de relations de mappage initiale correspondant au couple de sortie de moteur et la vitesse du véhicule lorsqu'il fonctionne (S2121); et
obtenir un confort de fonctionnement du véhicule renvoyé par un testeur après que le filtrage soit effectué dans chaque relation de mappage dans la troisième table de relations de mappage initiale, et prendre le confort comme le troisième résultat de filtrage (S2122); et
déterminer si le deuxième gradient de filtrage prédéfini $M_2$' dans la troisième table de relations de mappage initiale doit être modifié en fonction du troisième résultat de filtrage, qui comprend:

déterminer si le troisième résultat de filtrage répond au troisième confort prédéfini (S2131) ;
lorsqu'on estime que le troisième confort prédéfini est atteint, déterminer si le deuxième gradient de filtrage préréglé $M_2$' n'a pas besoin d'être modifié (S2132); et
lorsqu'on estime que le troisième confort prédéfini n'est pas atteint, déterminer si le deuxième gradient de filtrage prédéfini M2' doit être modifié (S2133).

14. Un système de commande de filtrage de couple de moteur pour un véhicule électrique hybride, comprenant un appareil de commande, dans lequel l'appareil de commande comprend une mémoire et un processeur, un programme de commande est stocké dans la mémoire, et le programme de commande est utilisé pour mettre en oeuvre le procédé de commande de filtrage de couple de moteur selon l'une quelconque des revendications 1 à 13 lorsqu'il est exécuté par le processeur.

15. Un véhicule électrique hybride, comprenant le système de commande de filtrage de couple de moteur selon la revendication 14.

Fig. 1

Fig. 2

Fig. 3

Look up a corresponding preset fourth mapping relationship table in the brake energy recovery working condition, the fourth mapping relationship table storing a mapping relationship of a motor output torque, a vehicle speed and a second filtering gradient $M_2$ — S210

Determine the corresponding second filtering gradient $M_2$ from the fourth mapping relationship table according to the motor output torque and the vehicle speed — S220

Filter the motor request torque of the motor in accordance with the second filtering gradient $M_2$ — S230

**Fig. 4**

Determine that the vehicle is in the pedaling working condition when an accelerator pedal of the vehicle is pressed — S101

After determining that the vehicle is in the pedaling working condition, judge whether the motor output torque after filtering in a (P-2)th filtering cycle is smaller than a first preset output torque, the first preset output torque being smaller than zero, and a Pth filtering cycle being the current filtering cycle — S102

When the motor output torque in the (P-2)th filtering cycle is smaller than the first preset output torque, judge whether the motor request torque in a (P-1)th filtering cycle is greater than a first preset request torque and whether the motor output torque after filtering in the (P-1)th filtering cycle is greater than a second preset output torque, the first preset request torque being greater than zero, and the second preset output torque being smaller than or equal to the first preset output torque — S103

When the motor request torque in the (P-1)th filtering cycle is greater than the first preset request torque, and the motor output torque after filtering in the (P-1)th filtering cycle is greater than the second preset output torque, determine that the motor is in the torque over-zero working condition in the current filtering cycle — S104

**Fig. 5**

Look up a corresponding preset first mapping relationship table and a second mapping relationship table in the current working condition and the driving mode, the first mapping relationship table storing a mapping relationship of the motor output torque, the vehicle speed and the maximum filtering velocity, and the second mapping relationship table storing a mapping relationship of the motor output torque, the vehicle speed and the minimum filtering velocity

S2021

Respectively determine the corresponding target maximum filtering velocity $V_{max}$ and the target minimum filtering velocity $V_{min}$ from the first mapping relationship table and the second mapping relationship table according to the motor output torque and the vehicle speed of the vehicle

S2022

**Fig. 6**

Generate a first initial mapping relationship table of the motor output torque, the vehicle speed and a preset filtering velocity V' in the working condition, the preset filtering velocity V' being a preset maximum filtering velocity or minimum filtering velocity to be modified

S1

Control the vehicle to operate in the working condition and different motor output torques and vehicle speeds according to the first initial mapping relationship table, and when the vehicle operates, filter the motor request torque of the motor by taking the preset filtering velocity V' in the first initial mapping relationship table corresponding to the motor output torque and the vehicle speed in the operation of the vehicle as a filtering gradient, to obtain a first filtering result

S2

Judge whether the preset filtering velocity V' in the first initial mapping relationship table needs to be modified according to the first filtering result; if so, modify the preset filtering velocity V', and if not, maintain the preset filtering velocity V', thereby calibrating the first initial mapping relationship table as the first mapping relationship table or the second mapping relationship table

S3

**Fig. 7**

Control the vehicle to operate by traversing all motor output torques and vehicle speeds in the first initial mapping relationship table in the working condition, and filter the motor request torque of the motor by taking the preset filtering velocity V' in the first initial mapping relationship table corresponding to the motor output torque and the vehicle speed in the operation of the vehicle as the filtering gradient

S21

Receive vehicle running comfort fed back from a tester after filtering conducted in each mapping relationship in the first initial mapping relationship table, the comfort being taken as the first filtering result

S22

**Fig. 8**

Judge whether the first filtering result meets first preset comfort

S31

When judging that the first preset comfort is met, determine that the preset filtering velocity V' does not need to be modified

S32

When judging that the first preset comfort is not met, determine that the preset filtering velocity V' needs to be modified

S33

**Fig. 9**

Select an interpolation coefficient determining method corresponding to the current working condition from multiple interpolation coefficient determining methods according to the current working condition of the vehicle

S2031

Determine the interpolation coefficient R according to the selected interpolation coefficient determining method

S2032

**Fig. 10**

Generate a second initial mapping relationship table of the motor request torque, the vehicle speed and a preset coefficient R' in the working condition

S231

Control the vehicle to operate in the working condition and different motor request torques and vehicle speeds according to the second initial mapping relationship table, and calculate a first initial filtering gradient $M_1$' by a formula $M_1'=R'*V_{max}+(1-R')*V_{min}$ according to the determined maximum filtering velocity $V_{max}$ and the minimum filtering velocity $V_{min}$ corresponding to different motor output torques and vehicle speeds and the preset coefficient R' corresponding to the different motor request torques and the vehicle speeds determined from the second initial mapping relationship table

S232

Filter the motor request torque of the motor in accordance with the first initial filtering gradient $M_1$' when the vehicle operates, to obtain a second filtering result

S233

Judge whether the preset coefficient R' in the second initial mapping relationship table needs to be modified according to the second filtering result; if so, modify the preset coefficient R', and if not, maintain the preset coefficient R', thereby calibrating the second initial mapping relationship table as the third mapping relationship table

S234

**Fig. 11**

Filter the motor request torque of the motor with the first initial filtering gradient $M_1$' when the vehicle operates by traversing all motor request torques and vehicle speeds in the second initial mapping relationship table

S2331

Receive vehicle running comfort fed back from a tester after filtering conducted in each mapping relationship in the second initial mapping relationship table, the comfort being taken as the second filtering result

S2332

**Fig. 12**

Generate a third initial mapping relationship table of the motor output torque, the vehicle speed and a second preset filtering gradient $M_2$' in the brake energy recovery working condition

S2101

Control the vehicle to operate in the brake energy recovery working condition with different motor output torques and vehicle speeds according to the third initial mapping relationship table, and when the vehicle operates, filter the motor request torque of the motor with a second preset filtering gradient $M_2$' in the third initial mapping relationship table corresponding to the motor output torque and the vehicle speed of the operating vehicle, to obtain a third filtering result

S2102

Judge whether the second preset filtering gradient $M_2$' in the third initial mapping relationship table needs to be modified according to the third filtering result; if so, modify the second preset filtering gradient $M_2$', and if not, maintain the second preset filtering gradient $M_2$', thereby calibrating the third initial mapping relationship table as the fourth mapping relationship table

S2103

**Fig. 13**

Control the vehicle to operate by traversing all motor output torques and vehicle speeds in the third initial mapping relationship table in the brake energy recovery working condition, and filter the motor request torque of the motor with the second preset filtering gradient $M_2$' in the third initial mapping relationship table corresponding to the motor output torque and the vehicle speed when the vehicle operates

S2121

Receive vehicle running comfort fed back from a tester after filtering conducted in each mapping relationship in the third initial mapping relationship table, the comfort being taken as the third filtering result

S2122

**Fig. 14**

Judge whether the third filtering result meets third preset comfort

S2131

When a judging result shows that the third preset comfort is met, determine that the second preset filtering gradient M$_2$' does not need to be modified

S2132

When the judging result shows that the third preset comfort is not met, determine that the second preset filtering gradient M$_2$' needs to be modified

S2133

**Fig. 15**

Determine that the vehicle is in the pedal release working condition when the accelerator pedal of the vehicle is released

S310

After determining that the vehicle is in the pedal release working condition, judge whether the motor output torque after filtering in the (P-2)th filtering cycle is greater than the third preset output torque, the third preset output torque being greater than zero, and a Pth filtering cycle being the current filtering cycle

S320

When the motor output torque of the (P-2)th filtering cycle is greater than the third preset output torque, determine whether the motor request torque in the (P-1)th filtering cycle is smaller than the second preset request torque and whether the motor output torque after filtering in the (P-1)th filtering cycle is smaller than the fourth preset output torque, the second preset request torque being smaller than zero, and the fourth preset output torque being greater than or equal to the third preset output torque

S330

When the motor request torque in the (P-1)th filtering cycle is smaller than the second preset request torque, and the motor output torque after filtering in the (P-1)th filtering cycle is smaller than the fourth preset output torque, determine that the motor is in the torque over-zero working condition in the current filtering cycle

S340

**Fig. 16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017355360 A1
- US 9340199 B1
- US 2009118945 A1